# EUROPEAN PATENT SPECIFICATION

(11) **EP 4 541 174 B1**
(45) Date of publication and mention of the grant of the patent: **12.08.2026**
(21) Application number: 24208659.3
(22) Date of filing: 03.06.2021
(51) Int. Cl.: G05D 1/00, A01D 34/00

(54) **ROBOTIC MOWER AND METHOD, SYSTEM AND DEVICE OF PATH PLANNING THEREOF**
ROBOTISCHER MÄHER UND VERFAHREN, SYSTEM UND VORRICHTUNG ZUR WEGPLANUNG DAFÜR
TONDEUSE ROBOTISÉE ET PROCÉDÉ, SYSTÈME ET DISPOSITIF DE PLANIFICATION DE TRAJET DE CELLE-CI

(30) Priority: 03.06.2020 CN 202010493112; 03.06.2020 CN 202020988949 U; 25.12.2020 CN 202011585147; 25.12.2020 CN 202011573504; 25.12.2020 CN 202023177681 U; 25.12.2020 CN 202011573674
(43) Date of publication of application: 23.04.2025
(62) Document number(s) of the earlier application(s) in accordance with Art. 76 EPC: 21816705.4 / 4 147 555
(73) Proprietor: Globe (Jiangsu) Co., Ltd., Changzhou, Jiangsu 213023 (CN)
(72) Inventor: LUNDKVIST, André, Douglas, Cork T12 V48N (IE); TRUONG, Daniel, 196 36 Kungsängen (SE); CAO, Jin, Changzhou, 213023 (CN); LI, Wanghao, Changzhou, 213023 (CN); GAO, Jie, Changzhou, 213023 (CN)
(74) Representative: Bergenstråhle & Partners AB

(56) References cited:
- EP-A1- 2 625 946
- EP-A1- 3 346 348
- EP-A2- 2 413 215

## Description

### TECHNICAL FIELD

The disclosure relates to the field of robotic mower, in particular relates to a robotic mower and its path planning method, system and device when exiting a charger station.

### BACKGROUND

Robotic mower is a kind of garden tools used for mowing lawns, vegetation, etc., usually includes a self-propelled mechanism, cutting mechanism and power source, the power source can be gasoline engine, battery pack, or the like. Battery-powered robotic mowers are popular with users because of their low noise and zero pollution. However, due to the constraints of battery energy density, battery production cost and other factors, the battery capacity of the battery pack carried by the robotic mower is very limited, which leads to a small operation area of the robotic mower. When the lawn area is large, the robotic mower needs to return to the charger station for recharging after working for a certain period of time, after recharging, it will leave the charger station and return to the working area.

When the robotic mower leaves from the charger station and returns to the mowing area, most of the mowers exit the station along a fixed path, which is not only easy to cause track, thus affecting the growth of lawn or vegetation in the track area; moreover, it is easy to cause overmuch mowing in the same path, thus affecting the overall mowing efficiency and the beauty of the lawn.

The existing robotic mower recharging method has the following problems: when the working area is large, and the robotic mower back and forth between the charger station and the working area for many times, it rolls the lawn for multiple times, which causes a certain damage to the lawn. In addition, too many charging times will reduce the service lifetime of the battery cell of the robotic mower, increasing the cost of work. When there are many obstacles in the working area, the robotic mower needs to bypass obstacles, which leads to a longer path back to the charger station and consume more electricity, therefore, the robotic mower cannot return to the charger station normally for recharging.

EP2413215 discloses a robotic mower home finding system, including a charging station connected to an outer boundary wire loop. A vehicle control unit on the robotic mower commands a traction drive system to drive the robotic mower along a path offset a specified distance parallel to an outer boundary wire loop toward the charging station. The vehicle control unit changes the specified distance each time the robotic mower returns home to the charging station.

### SUMMARY

In view of the above-mentioned shortcomings, the present invention provides a robotic mower and its path planning method, system and device exiting a charger station, which can be configured to solve the technical problems that the robotic mower is prone to cause tracks when it leaves the charger station and returns to the mowing area and mows overmuch in the same path.

The present invention provides a path planning method of a robotic mower exiting a charger station as defined by independent claim 1. The present invention also provides a path planning system of a robotic mower exiting a charger station, a robotic mower and a memory media as defined by independent claims 3, 4 and 6. Preferred embodiments are defined by dependent claims 2 and 5.

### BRIEF DESCRIPTION OF THE DRAWINGS

FIG. 1 is a schematic structural view of a path planning device of a robotic mower to move out from a charger station according to an embodiment of the disclosure.
FIG. 2 is a schematic block view of the robotic mower according to an embodiment of the disclosure.
FIG. 3 is a schematic flow chart of a path planning method for a robotic mower according to an embodiment of the disclosure.
FIG. 4 is a schematic sub-flowchart of S12 in FIG. 3.
FIG. 5 is s a schematic view of controlling the robotic mower to exit the charger station and continue to move for a random distance according to an embodiment of the disclosure.
FIG. 6 is a schematic view of controlling the robotic mower to rotate for 90° according to an embodiment of the disclosure.
FIG. 7a, FIG. 7b are schematic views of controlling the robotic mower to move along an arc to search target signal amplitude according to an embodiment of the disclosure.
FIG. 8a to FIG. 8h are schematic views of controlling the robotic mower to follow a boundary wire according to the target signal amplitude until a predetermined distance is traveled according to an embodiment of the disclosure.
FIG. 9a, FIG. 9b are schematic views of controlling the robotic mower to move along an arc away from the boundary wire after the predetermined distance is traveled according to an embodiment of the disclosure.
FIG. 10 is a schematic view of the robotic mower starting a random mowing operation in a working area according to an embodiment of the disclosure.
FIG. 11a to FIG. 11d are schematic views of the robotic mower following the boundary wire at a second predetermined distance according to an embodiment of the disclosure.
FIG. 12 is a schematic block view of a path planning system of the robotic mower according to an embodiment of the disclosure.
FIG. 13 is a schematic block view of a control unit according to an embodiment of the disclosure.
FIG. 14 is a schematic view of the path planning device of the robotic mower for the robotic mower to move out from the charger station according to another embodiment of the disclosure.
FIG. 15 is a schematic flow chart of the path planning method of the robotic mower according to another embodiment of the disclosure.
FIG. 16 is a schematic sub-flowchart of S22 shown in FIG. 15.
FIG. 17 is a schematic view of the robotic mower to exit the charger station until the robotic mower is outside a loop of the charger station and continue to move for a random distance according to another embodiment of the disclosure.
FIG. 18a, FIG.18b are schematic views of the robotic mower rotating to enable a rear sensor to aim at a walking direction according to another embodiment of the disclosure.
FIG. 19a to FIG. 19e are schematic views of the robotic mower straddling a guide wire until the predetermined distance is traveled according to another embodiment of the disclosure.
FIG. 20 is a schematic view of the robotic mower rotating for 90° after the predetermined distance is traveled according to another embodiment of the disclosure.
FIG. 21 is a schematic view of the robotic mower starting a random mowing operation in a working area according to another embodiment of the disclosure.
FIG. 22 is a schematic view of a rear end of the robotic mower rotating at a random angel, define a distance between the rear sensor and the guide wire as the random corridor distance according to another embodiment of the disclosure.
FIG. 23 is a schematic view of the robotic mower moving by following the guide wire at the random corridor distance according to another embodiment of the disclosure.
FIG. 24a to FIG. 24i are schematic views of the robotic mower bypassing an obstacle during straddling or following the guide wire according to another embodiment of the disclosure.
FIG. 25 is a schematic block view of the path planning system of the robotic mower according to another embodiment of the disclosure.
FIG. 26 is a schematic view of a distribution of the robotic mower, working area and the charger station of the disclosure.
FIG. 27 is a schematic view of a virtual working area and a return path of the disclosure.
FIG. 28 is a schematic flow chart of a return path planning method of a self-propelled power device of the disclosure.
FIG. 29 is a partial logical schematic view of planning an X-axis direction path according to the disclosure.
FIG. 30 is a partial logical schematic view of planning a Y-axis direction path according to the disclosure.

### DETAILED DESCRIPTION

The following describes the implementation of the disclosure through specific embodiments, and those skilled in the art can easily understand other advantages and effects of the disclosure from the content disclosed in this specification. The disclosure can also be implemented or applied through other different specific embodiments, and various details in this specification can also be modified or changed based on different viewpoints and applications without departing from the disclosure.

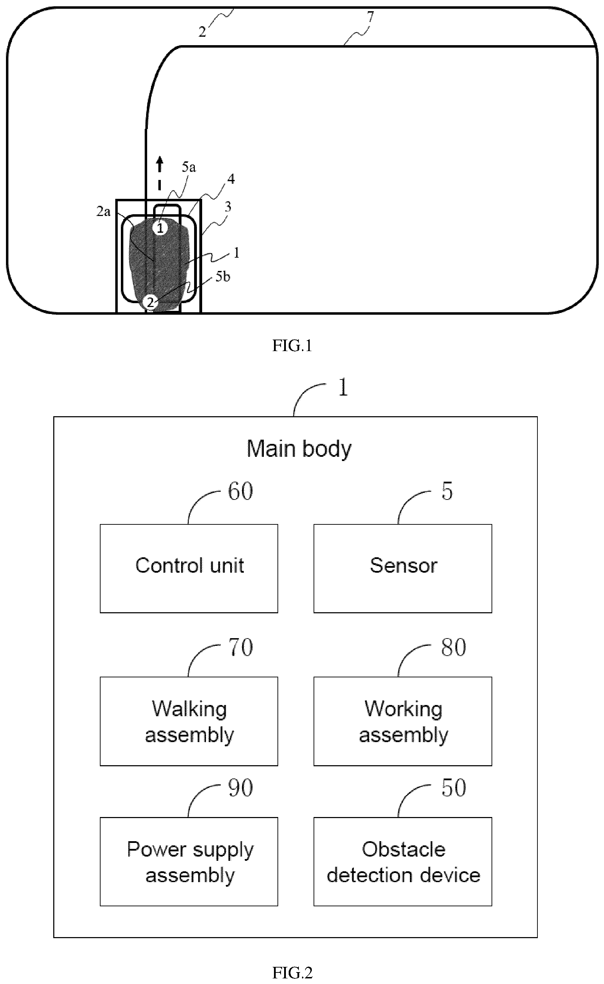

Please refer to FIG. 1 through FIG. 30. It should be noted that the diagrams provided in these embodiments only illustrate the basic idea of the disclosure in a schematic manner. The figures only show the components related to the disclosure instead of the number, shape, and size drawing of the components in actual implementation. In its actual implementation, the type, quantity, and ratio of each component can be changed at will, and its component layout type may also be more complicated.

### The first embodiment

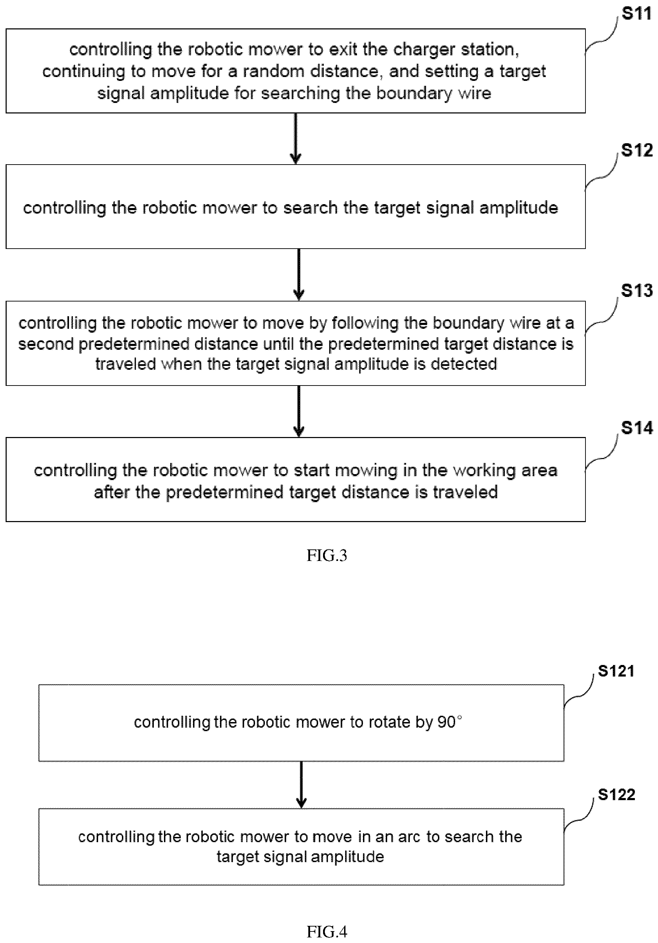

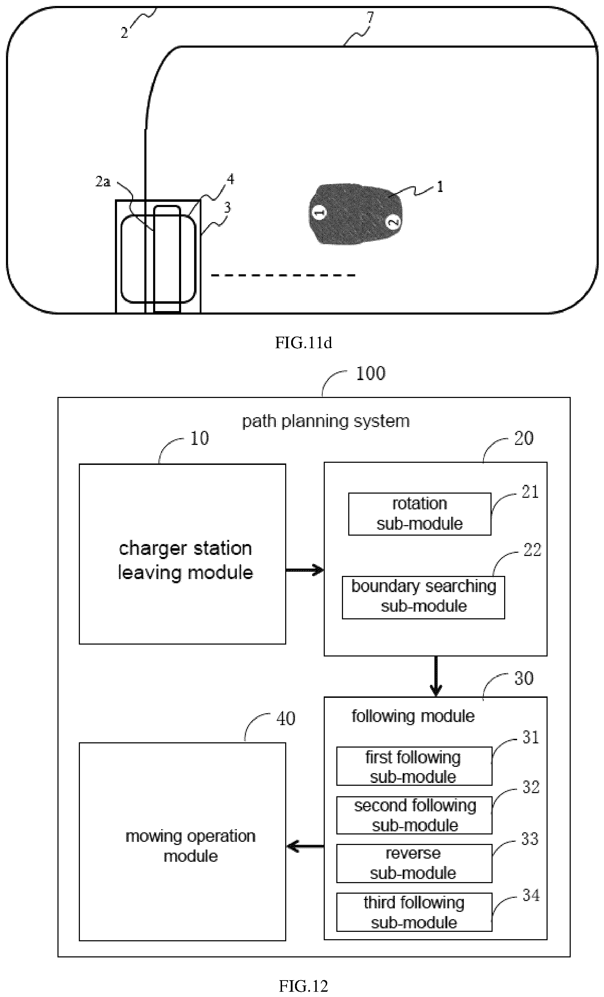

Electric motor-driven robotic mowers need to frequently return to a charger station for charging. When the robotic mowers leave the charger station and return to the mowing area for working, in order to avoid tracks generated by the robotic mowers when leaving the charger station along fixed tracks and problems of more mowing on the same path, this embodiment provides a path planning method, system and device of a robotic mower exiting a charger station. FIG. 1 shows a schematic structural view of a path planning device of a robotic mower of this embodiment, FIG. 2 shows a schematic block view of the robotic mower of this embodiment, FIG. 3 shows a schematic flow chart of the path planning method of the robotic mower of this embodiment, FIG. 12 shows a path planning system and a schematic block view of the robotic mower of this embodiment. It should be noted that, in order to make the drawings more clear, the robotic mower and the charger station are enlarged and shown in FIG. 1 and FIG. 5 through FIG. 11. In this embodiment, the robotic mower includes a self-propelled robotic mower, the robotic mower is a battery-powered electric tool that needs to be charged regularly. The robotic mower can move within a working area defined by a boundary wire during use.

Please refer to FIG. 1 and FIG. 2, in this embodiment, a path planning device of a robotic mower for a robotic mower 1 to move out from a charger station includes the robotic mower 1, a guide wire 7, a boundary wire 2 and a charger station 3.

Please refer to FIG. 1 and FIG. 2, in this embodiment, the robotic mower 1 includes a main body, and a control unit 60 (as described in a relevant section below) arranged on the main body, an obstacle-avoidance detection device 104 and at least two sensors 5. One of the sensors 5 is arranged at a front end of the main body as a front sensor 5a. Another sensor is arranged at a rear end of the main body as a rear sensor 5b, the sensors 5 are used to sense at least one of guide signals of the boundary 2, the guide wire 7 and a loop 4 of the charger station. The control unit 60 is used to control the robotic mower 1 to leave the charger station 3 according to the guide signal. The obstacle-avoidance detection device 104 is used to detect obstacles on a moving path of the robotic mower 1, and then the signal is transmitted to the control unit 60. The control unit 60 controls the robotic mower 1 to realize an obstacle bypass operation to bypass the obstacles.

Please refer to FIG. 2, in this embodiment, the obstacle-avoidance detection device 104 may be, for example, an infrared sensor, a laser sensor, or a collision sensor, etc. The collision sensor may include a magnet and a hall sensor, or the collision sensor may include an armature or an inductive sensor. Take the collision sensor including a magnet and a hall sensor as an example, the magnet or hall sensor may be mounted respectively on two components of the robotic mower 1, the two components may be a top cover and a housing of the main body of the robotic mower 1. When the robotic mower 1 collides, one of the components (such as top cover) moves forward a distance along a direction of the robotic mower 1 under an action of inertia relative to the other component (such as shell), so as to cause a relative displacement of the magnet and hall sensor, thereby causing a change of a hall sensor signal. At this time, the hall sensor may send the signal to the control unit 60, and the control unit 60 controls the robotic mower 1 to realize the obstacle bypass operation, so as to bypass the obstacles.

Please refer to FIG. 1, the boundary 2 may be located under the ground along an edge of the working area, of course, boundary 2 may also be arranged on or above a surface of ground. At a position of charger station 3, the boundary 2 is depressed inward into the working area to define a boundary loop 2a of the charger station, which is narrower than the loop 4 of the charger station and passes through the loop 4 of the charger station. The boundary 2 may be, for example, a single-core metal cable (such as copper cable) or multi-strand cable, etc. The charger station 3 is located on the boundary wire 2, which is set as a charging plate to facilitate the robotic mower 1 to be on a uniform and continuous plane during a connecting process, so as to ensure a more accurate connecting process. In order to facilitate the robotic mower 1 to identify and locate a position of charger station 3, the loop 4 of the charger station is set in the charger station 3, and the boundary wire 2 is depressed inward into the working area at the position of charger station 3 to define a boundary loop 2a of the charger station, which is narrower than the loop 4 of the charger station and passes through the loop 4 of the charger station, the boundary loop 2a of the charger station is used to guide the robotic mower to exit the charger station.

Please refer to FIG. 1, in this embodiment, the guide wire 7 is pre-laid in the working area of the robotic mower 1. Two ends of the guide wire 7 are connected to the charger station 3 and the boundary wire 2 respectively. An end of the guide wire 7 connected to the charger station 3 is also connected to the boundary wire 2, so that the guide wire 7 and a relatively short part of the boundary wire 2 located between the two ends of the guide wire 7 together form a closed loop. The guide wire 7 may be buried in the working area to hide the boundary wire 2 for example. Of course, the guide wire 7 may also be arranged on or above the ground in the working area.

Please refer to FIG. 1, in this embodiment, the boundary wire 2 (including the charger station boundary loop 2a), the guide wire 7, and the loop 4 of the charger station are respectively coupled to a signal generating device set in the charger station 3. The signal generating device is used to generate a certain frequency pulse current signal and input the generated signal into the boundary wire 2, the guide wire 7 or the loop 4 of the charger station to form a guide signal in the boundary wire 2, the guide wire 7 or the loop 4 of the charger station, and the guide signal generated by the boundary wire 2, the guide wire 7 or the loop 4 of the charger station needs to have its own special characteristics to distinguish the signal. For example, pulse current signals can be input to the boundary wire 2, the guide wire 7 and the loop 4 of the charger station respectively in an interval manner, so that the boundary wire 2, the guide wire 7 and the loop 4 of the charger station can respectively produce corresponding guide signals in different time intervals. The sensor 5 may be, for example, a magnetic field sensor 5 or a current sensor 5 in order to measure the guide signal of at least one of the boundary wire 2, the guide wire 7 or the loop 4 of the charger station.

Please refer to FIG. 1 and FIG. 2, the robotic mower 1 further includes a walking assembly 70, a working assembly 80 and a power supply assembly 90 which are arranged on the main body. The walking assembly 70 includes driving wheels arranged on both sides of the main body, the driving wheels may be, for example, located in front of the main body, which means to be located in front of sensors 5a (also may be located at rear of the main body in other embodiments), the two driving wheels are driven by two driving motors. At least one supporting wheel is further arranged in front of the main body, the robotic mower 1 is supported by the driving wheels and the supporting wheel to move. The supporting wheel, for example, may be a universal wheel. The control unit 60 controls a walking direction and speed of the robotic mower 1 by controlling rotation speeds of the two driving motors, when the rotation speeds of the driving motors are different, the robotic mower 1 may turn, when the rotation speeds of the driving motors are the same, the robotic mower 1 may realize a straight moving, when the rotation speeds of the driving motors are opposite, the robotic mower 1 may realize a zero steering in situ. The working assembly 80 includes a cutting motor and a cutting head driven by the cutting motor. The working assembly 80 is approximately located at the center of the robotic mower 1. A rotation axis of the cutting motor is approximately perpendicular to the horizontal plane. The working assembly 80 can be adjusted in height from the ground by an operator to realize an adjustment of a cutting height. The power supply assembly 90 includes a rechargeable battery and a charging system for powering the rechargeable battery. The control unit 60 receives various signals sent to the robotic mower 1 or signals collected by the sensor 5, and generates corresponding control signals through a processor 61. A walking unit or a working unit is controlled according to the generated control signals, so that the robotic mower 1 can leave the charger station 3 along the planned path for mowing. The robotic mower 1 can leave the charger station 3 according to the path planning method of the robotic mower, the path planning system of the robotic mower or the planned path below, or robotic mower 1 can leave the charger station 3 according to the path planned by other suitable methods.

It should be noted that an alarm device (not shown) is also provided on the main body of the robotic mower 1. The alarm device is used to give an alarm when errors or unexpected situations occur, or to send the alarm information to the user's terminal device wirelessly. After the user receives the alarm signal, the user can eliminate the errors or deal with unexpected situations in time, so that the robotic mower 1 can work normally. Unexpected situations may be, for example, that the robotic mower 1 is stuck in a certain terrain, cannot cross obstacles, cannot find a guide wire, cannot find a boundary wire, or has insufficient power to return to a charger station.

In this embodiment, it is illustrated as an example that the guide signal is an alternating magnetic field and the sensor 5 is a magnetic induction coil. It is understandable that in the embodiment of the path planning method and system of the robotic mower, other suitable guide signal forms or different types of sensors 5 can also be used. For example, the signal generating device can input an alternating pulse current signal into the boundary wire 2, the guide wire 7 or the loop 4 of the charger station, so as to generate an alternating magnetic field around the boundary wire 2, the guide wire 7 or the loop 4 of the charger station. The sensor 5 may be a magnetic induction coil, for example. The sensing principle is: that according to the magnetic induction effect, when an alternating pulse current is input to the boundary wire 2, the guide wire 7 or the loop 4 of the charger station, an alternating magnetic field can be produced around the boundary wire 2, the guide wire 7 or the loop 4 of the charger station. When the magnetic induction coil is located near the boundary wire 2, the guide wire 7 or the loop 4 of the charger station, the magnetic induction coil will generate an induced electromotive force in the alternating magnetic field, so that an induced current will be generated in the magnetic induction coil, and the induced current is filtered and amplified and then sent to the control unit 60 of the robotic mower 1. The control unit 60 can determine the position and orientation of the robotic mower 1 relative to the boundary wire 2, the guide wire 7 or the loop 4 of the charger station according to the magnitude and polarity of the induced current. On a side of boundary wire 2, guide wire 7 or loop 4 of the charger station, the closer to the boundary wire 2, the guide wire 7 or the loop 4 of the charger station, the greater the magnetic field intensity is, which means that the closer the magnetic induction coil is to the boundary wire 2, the guide wire 7 or the loop 4 of the charger station, the greater the induced current output. Since the magnetic induction coil is installed and fixed on the robotic mower 1, a distance between the robotic mower 1 and the boundary wire 2, the guide wire 7 or the loop 4 of the charger station can be obtained according to the magnitude of the induced current. Since a direction of the magnetic field on both sides of the boundary wire 2, the guide wire 7 or the loop 4 of the charger station is opposite, when the magnetic induction coil is on both sides of the boundary wire 2, the guide wire 7 or the loop 4 of the charger station, the polarity of the induced current is opposite (one side is positive and the other side is negative). Therefore, it can be determined whether the magnetic induction coil of the robotic mower 1 has crossed the boundary wire 2, the guide wire 7 or the loop 4 of the charger station according to the change in the polarity of the induced current of the magnetic induction coil. When a center of the magnetic induction coil is on the boundary wire 2, the guide wire 7 or the loop 4 of the charger station, the induced current of the magnetic induction coil is zero, therefore, this special position relationship between the magnetic induction coil and the boundary wire 2, the guide wire 7 or the loop 4 of the charger station can be determined according to the situation. It should be noted that alternating current pulse signals can avoid the interference of additional magnetic fields because the current pulse signal allows the sensor 5 of the robotic mower 1 to receive the signal (alternating magnetic field signal) at different time, short time intervals and only within the corresponding time interval, so that the system can filter out other magnetic field noise signals that will interfere with the function of the robotic mower 1. The following will take the sensor 5 as a magnetic induction coil and the guide signal generated by the boundary wire 2, the guide wire 7 or the loop 4 of the charger station as an alternating magnetic field as an example to illustrate the technical solution of this embodiment.

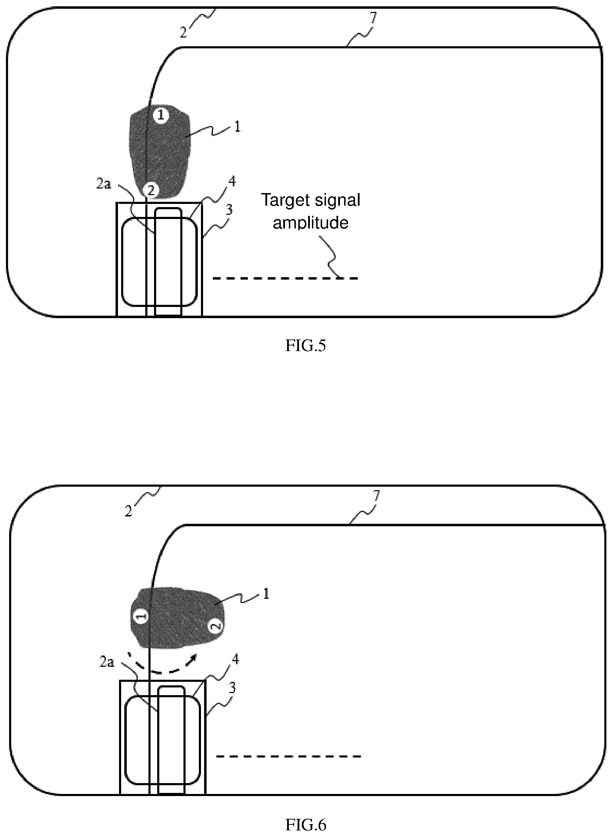

FIG. 3 shows the path planning method of the robotic mower 1 used for the robotic mower 1 to leave the charger station 3 in this embodiment. The guide signals of the boundary wire 2 and the loop 4 of the charger station are sensed by two magnetic induction coils (respectively as the front sensor 5a and the rear sensor 5b) arranged at a front end or a rear end of the robotic mower 1 to realize the robotic mower 1 leaving the charger station 3. Wherein, the magnetic induction coil as the front sensor 5a may be arranged on a center line of a front end of the main body, the magnetic induction coil as the rear sensor 5b may be arranged on one side of a center line of the rear end of the main body. The path planning method of the robotic mower includes the following steps: S11, controlling the robotic mower 1 to exit the charger station 3, continuing to move for a random distance, and setting a target signal amplitude for searching the boundary wire 2, S12, controlling the robotic mower 1 to search the target signal amplitude, S13, when the target signal amplitude is detected, controlling the robotic mower 1 to move by following the boundary wire 2 at a second predetermined distance until the predetermined target distance is traveled, S14, controlling the robotic mower 1 to start mowing in the working area after the predetermined target distance is traveled. Wherein, FIG.5 through FIG.11 respectively correspond to schematic views of the position and orientation of the robotic mower 1 in the working area in different steps of the path planning method of the robotic mower 1. The path planning method of the robotic mower 1 in this embodiment will be described according to FIG.5 through FIG.11 in follow.

Firstly, execute S11, controlling the robotic mower 1 to exit the charger station 3 according to the guide signal of the loop 4 of the charger station detected by the rear sensor 5b. As shown in FIG. 1 and FIG. 5, after a charging is finished, the robotic mower 1 start to exit the charger station 3. When a polarity of the guide signal of the loop 4 of the charger station detected by the rear sensor 5b reverses (a polarity of the induction current of the rear sensor 5b reverses), it indicates the robotic mower 1 exits out of the loop 4 of the charger station, and continues to move for a random distance. As an example, the random distance may be between 50cm to 250cm, such as 50cm, 100cm, 150cm, 200cm and 250cm, of course the distance may be selected out of the above-mentioned range according to actual requirements.

In addition, in S11, setting the target signal amplitude to search the boundary wire 2, the boundary wire 2 is pre-laid on an edge of the working area of the robotic mower 1, the target signal amplitude corresponds to a guide signal amplitude detected by the rear sensor 5b when the rear sensor 5b is in a first predetermined distance from the boundary wire 2, as a result, in S12, the boundary wire 2 may be searched according to the target signal amplitude.

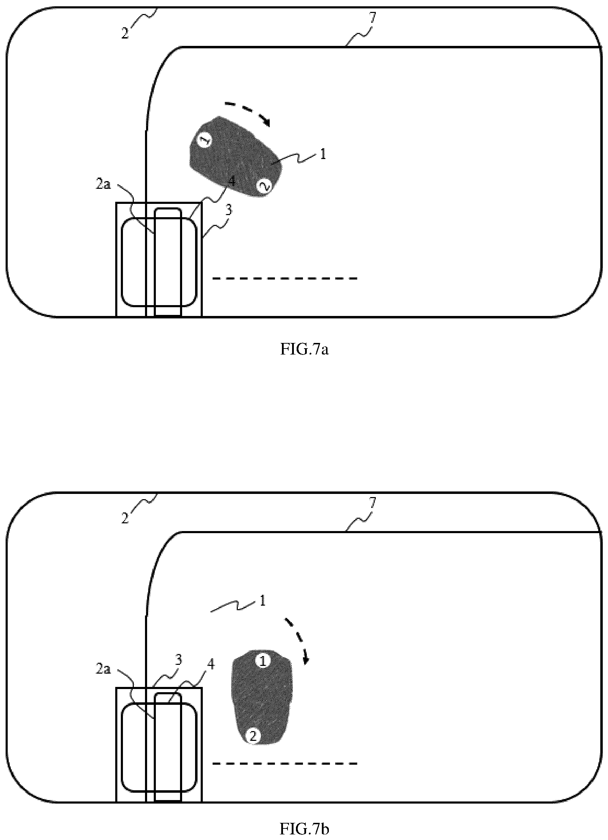

Then, execute S12, controlling the robotic mower 1 to search the target signal amplitude according to the guide signal of the boundary wire 2 detected by the rear sensor 5b (of course, the front sensor 5a may also be applied). As shown in FIG. 4, S12 may further include S21 and S22. In S121, as shown in FIG. 6, controlling the robotic mower 1 to rotate by 90°, or by other suitable value. In S122, as shown in FIG. 7a and 7b, controlling the robotic mower 1 to move in an arc, so as to use the rear sensor 5b to search the target signal amplitude.

In S122, controlling the robotic mower 1 to move in an arc to find the guide signal of the loop 4 of the charger station, and then following the loop 4 of the charger station to search the target signal amplitude, so as to find the boundary wire 2. In a specific example, as shown in FIG. 7a, robotic mower 1 may be controlled to move in a first arc with a central angle of 90° and a radius of 50cm, so as to search for the target signal amplitude for the first time, when the target signal amplitude is found at the first time, directly execute S13. When the target signal amplitude is not found at the first time, as shown in FIG. 7b, the robotic mower 1 is then controlled to move in a second arc with a central angle of 45° and a radius of 100cm to search for the target signal amplitude for a second time. When the target signal amplitude is found for the second time, directly execute S13. When the target signal amplitude is still not found for the second time, the robotic mower 1 is controlled to move in a third arc (circle) with a central angle of 360° and a radius of 200cm to search for the target signal amplitude for the third time. When the target signal amplitude is found for the third time, directly execute S13. When the target signal amplitude is still not found for the third time and the robotic mower 1 is still in the working area, the search for the target signal amplitude is terminated and a mowing will be carried out directly. Through a movement of the first arc to the third arc mentioned above, the rear sensor 5b of the robotic mower 1 may be close to the loop 4 of the charger station, so that the rear sensor 5b can detect the guide signal of the loop 4 of the charger station and follow the loop 4 of the charger station to search the target signal amplitude. It should be noted that in this embodiment, the radius and the central angle of the first, second and third arcs mentioned above may be adjusted as required.

Then execute S13, when the target signal amplitude is found, starting to measure a moving distance of the robotic mower 1, and controlling the robotic mower 1 to follow the boundary wire 2 and move by the second predetermined distance until a predetermined target distance is traveled.

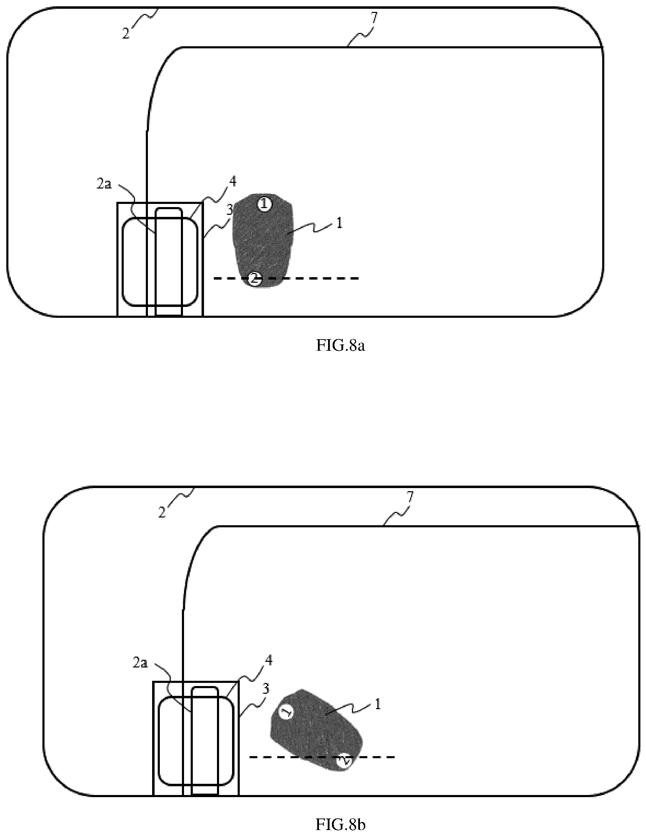

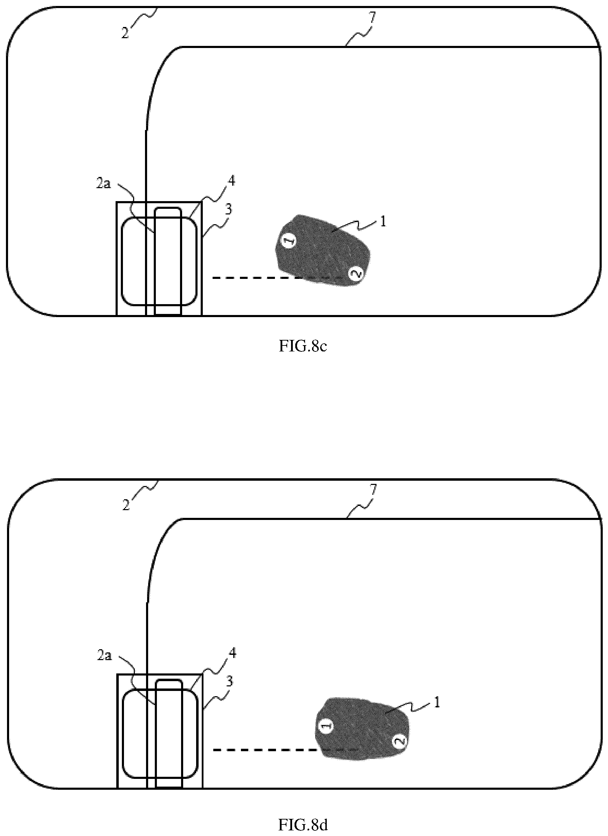

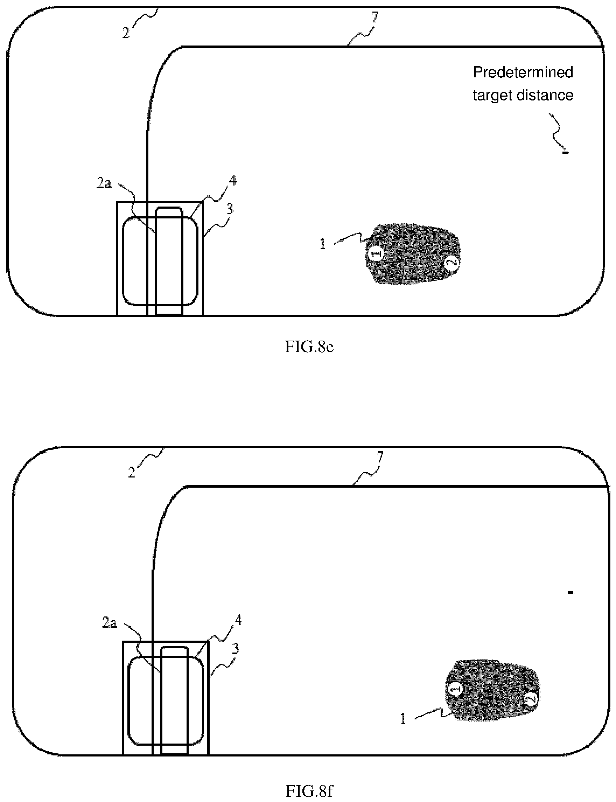

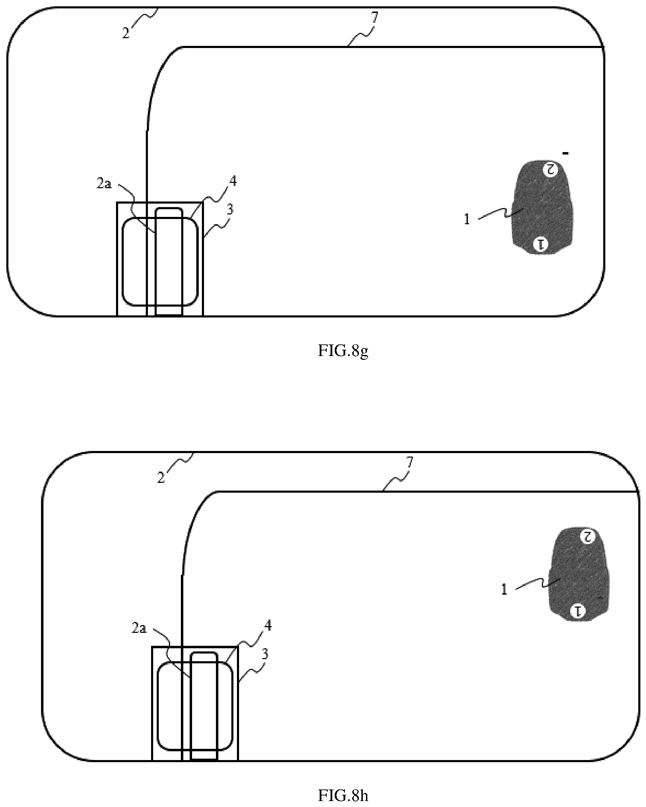

In one embodiment, as shown in FIG. 8a through FIG. 8h, in S13, for example, the robotic mower 1 may be controlled to follow the boundary wire 2 according to the target signal amplitude until the predetermined target distance is traveled, so that the first predetermined distance is equal to the second predetermined distance.

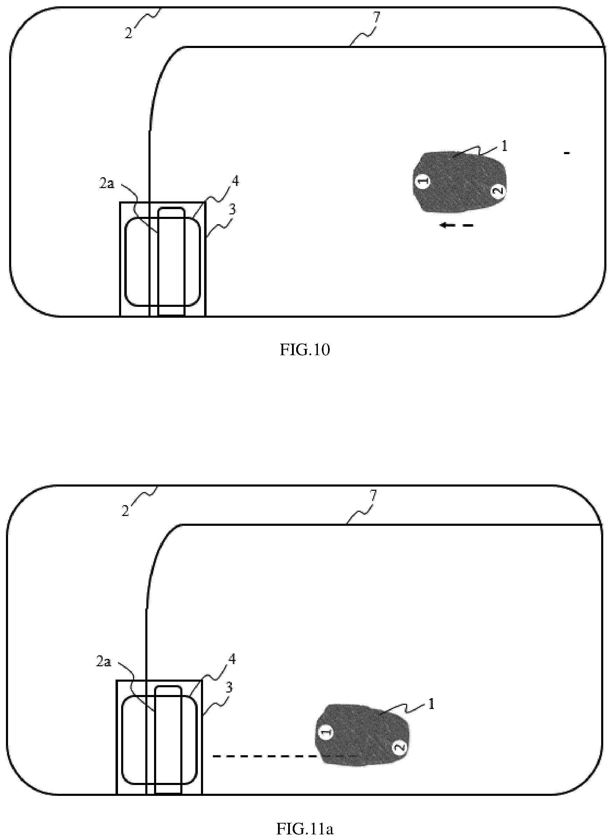

When following the boundary 2 at the target signal amplitude, the robotic mower 1 is easy to repeat rolling which forms a track and affects the growth of lawn or vegetation in the track area. To avoid this, for example, the robotic mower 1 may move by following the boundary wire 2 as shown in FIG.11a through FIG. 11d.

First, as shown in FIG. 11a, the robotic mower 1 is controlled to follow the boundary 2 according to the target signal amplitude until it finds a straight boundary area of boundary 2, and then the robotic mower 1 is controlled to move reversely for a random backward distance which is less than or equal to a length of the straight boundary area. For further explanation, when within a certain boundary area, current sensing signals of the front sensor 5a and/or the rear sensor 5b remain stable, which means the boundary area is a straight boundary area. This is because that when the boundary wire 2 is not straight, since a motion state of the robotic mower 1 needs to be adjusted frequently in a process of moving, a distance between the robotic mower 1 and the boundary wire 2 will change, which causes a change of the current sensing signal of the sensors. As an example, when boundary wire 2 on both sides of charger station 3 is a straight line, the robotic mower 1 may also follow the boundary wire 2 to move in a boundary area for a predetermined time and the boundary area may be as a straight boundary area. As an example, the random reverse distance may be equal to half of the length of the straight boundary area.

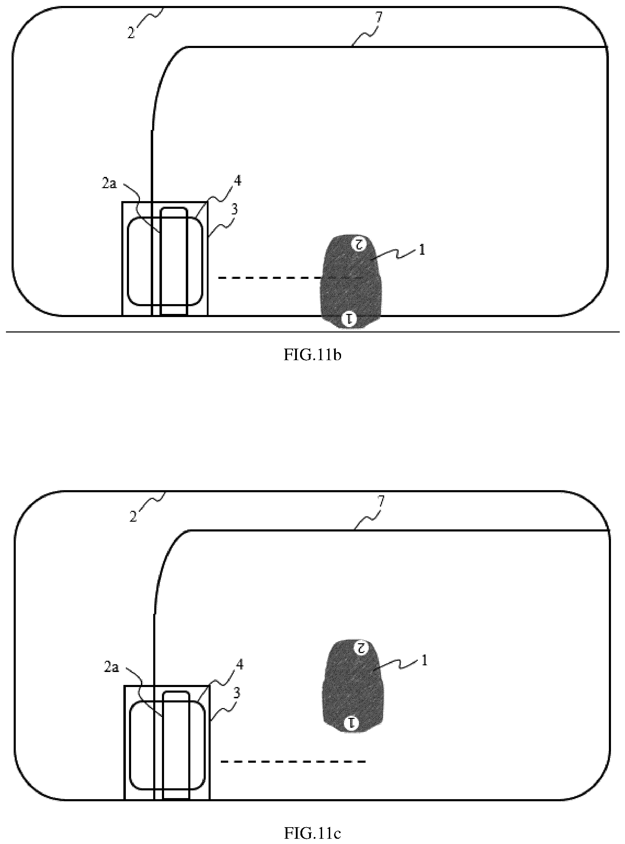

Secondly, the robotic mower 1 is controlled to move by following the boundary wire 2 with the second predetermined distance which is greater than the first predetermined distance until the predetermined target distance is traveled. As shown in FIG. 11b, the robotic mower 1 is controlled to rotate by 90° (or any other appropriate angle) so that a head part of the robotic mower 1 points to the boundary wire 2; as shown in FIG. 11c, the robotic mower 1 is controlled to move into the working area without changing a direction of the robotic mower 1; as shown in FIG.11d, the robotic mower 1 is controlled to rotate back by 90°, in order to keep the walking direction of the robotic mower 1 unchanged before and after the adjustment, and define a distance between the rear sensor 5b and the boundary wire 2 as the second predetermined distance, and the robotic mower 1 is controlled to move by following the boundary wire 2 with the second predetermined distance until the predetermined target distance is traveled. It should be noted that in one embodiment, in order to ensure reliability, the robotic mower 1 may be controlled to move outside the working area until the front sensor 5a cross the boundary wire 2 without changing the direction of the robotic mower 1, then the robotic mower 1 may be controlled to move into the working area, and the distance of the robotic mower 1 moving into the working area is greater than the distance the robotic mower 1 moving out of the working area, so as to ensure that the second predetermined distance is greater than the first predetermined distance.

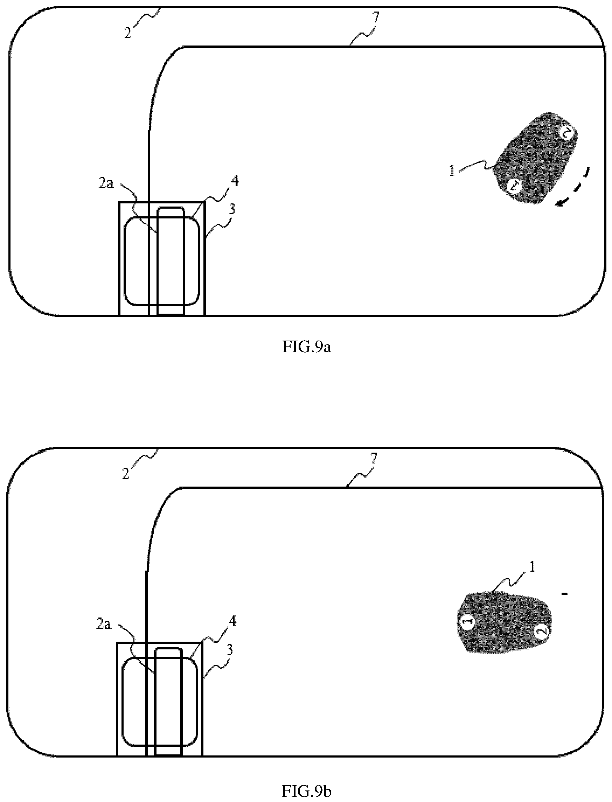

Finally, execute S14, as shown in FIG. 9a and FIG. 9b, when a total moving distance of the robotic mower 1 is detected to be the same as a predetermined target distance, it means that the robotic mower 1 arrives at a target location, at this time the robotic mower 1 is controlled to stop moving and start mowing in the working area. In one embodiment, the robotic mower 1 is controlled to move in an arc with a central angle of 90° and radius of 50cm in a direction away from the boundary wire 2, and then the robotic mower 1 is controlled to start mowing in the working area. As an example, the robotic mower 1 may mow in a random way in the working area, during the random mowing, the robotic mower 1 may randomly rotate within 360°, when the robotic mower 1 rotates randomly into a random direction to mow forward, the robotic mower 1 moves along a straight direction until it reaches the boundary wire 2 (whether the boundary wire 2 is crossed may be determined according to the polarity of the induced current generated by the front sensor 5a responding to the guide signal of the boundary wire 2), after reaching the boundary wire 2, the robotic mower 1 rotates in a random angle inwards to start mowing.

It should be noted that the division of operations in the various methods above is just for clarity of description. When implemented, it can be combined into one operation or some operations can be split into multiple operations. As long as they contain the same logical relationship, they are all within the scope of the disclosure. Adding insignificant modifications to the algorithm or process or introducing insignificant design, but not changing the core design of the algorithm and process are within the scope of the disclosure.

Please refer to FIG. 12, the embodiment further introduces a path planning system of a robotic mower which is used to realize the path planning method of the robotic mower mentioned above. The path planning system of the robotic mower includes a charger station leaving module 10, a searching module 20 (as a boundary searching module), a following module 30 (as a boundary following module) and a mowing operation module 40. The charger station leaving module 10 is used to control the robotic mower 1 to exit the charger station 3 and continue to move for a random distance, and set the target signal amplitude for searching the boundary wire 2, the boundary wire 2 is pre-laid on the edge of the working area of the robotic mower, when a distance of the rear sensor 5b to the boundary wire 2 corresponding the target signal amplitude is the first predetermined distance, the rear sensor 5b detects an amplitude of the guide signal of the boundary wire. The searching module 20 is used to control the robotic mower 1 to search the target signal amplitude, which means to search the boundary wire 2. The following module 30 is used to control the robotic mower 1 to move by following the boundary wire 2 at the second predetermined distance until the predetermined target distance is traveled when the target signal amplitude is found (which means that the robotic mower 1 finds the boundary wire). The mowing operation module 40 is used to control the robotic mower 1 to start mowing in the working area after the predetermined target distance is traveled.

Please refer to FIG. 12, the searching module 20 includes a rotation sub-module 21 and the boundary searching sub-module 22. The rotation sub-module 21 is used to control the robotic mower 1 to rotate by 90° (it may also be other appropriate angles). The boundary searching sub-module 22 is used to control the robotic mower 1 to move in an arc to search the target signal amplitude.

Please refer to FIG. 12, the following module 30 further includes a first following sub-module 31, a second following sub-module 32, a reverse sub-module 33, and a third following sub-module 34. The first following sub-module 31 is used to control the robotic mower 1 to move by following the boundary wire 2 with the target signal amplitude until the predetermined target distance is traveled, and the first predetermined distance is equal to the second predetermined distance. The second following sub-module 32 is used to control the robotic mower 1 to move by following the boundary wire 2 with the target signal amplitude until the straight boundary area of the boundary wire 2 is found. The reverse sub-module 33 is used to control the robotic mower 1 to reverse for a random backwards distance, and the random backwards distance is less than or equal to the length of the straight boundary area. The third following sub-module 34 is used to control the robotic mower 1 to move by following the boundary wire 2 with the second predetermined distance which is greater than the first predetermined distance until the predetermined target distance is traveled.

It should be noted that the path planning system of the robotic mower of this embodiment is a system corresponding to the path planning method of the robotic mower mentioned above. And the functional modules or functional sub-modules in the path planning system of the robotic mower correspond to the operations in the path planning method of the robotic mower. The path planning system of the robotic mower of this embodiment can be implemented in cooperation with the path planning method of the robotic mower. The relevant technical details mentioned in the path planning method of the robotic mower of this embodiment are still valid in the path planning system of the robotic mower. In order to reduce repetition, it will not be repeated here. Correspondingly, the relevant technical details mentioned in the path planning system of the robotic mower of this embodiment can also be applied to the path planning method of the robotic mower mentioned above.

In the implementation process, each operation of the method and the modules mentioned above can be completed by an integrated logic circuit of hardware in an element of the processor 61 or instructions in the form of software.

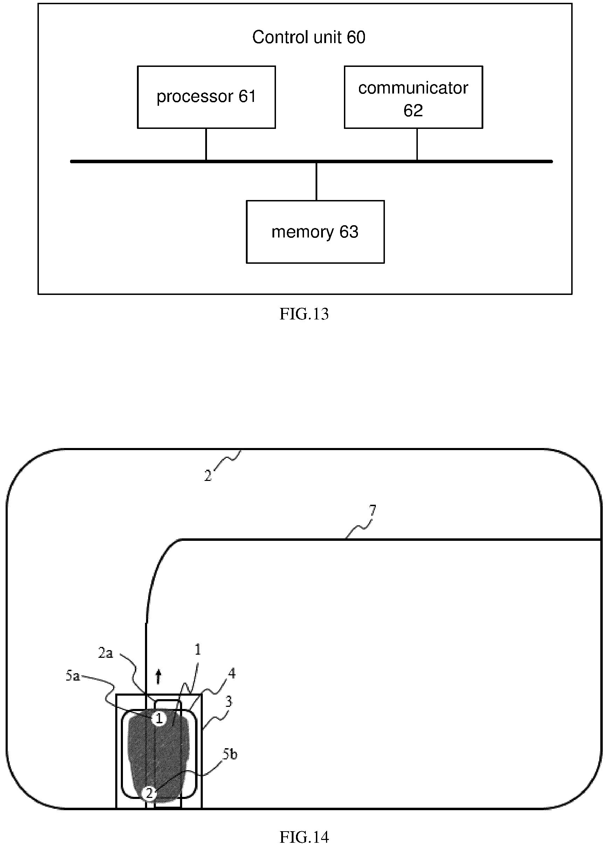

It should be noted that, as shown in FIG. 13, the path planning method of the robotic mower of this embodiment can also be implemented by a control unit 60 arranged on the main body of the robotic mower 1. The control unit 60 includes a memory 63 and a processor 61 that are connected with each other. The memory 63 stores program instructions. When the program instructions are executed by the processor 61, the path planning method of the robotic mower mentioned above can be implemented. It should be noted that, when it is necessary to communicate with the outside world, the control unit 60 further includes a communicator 62, and the communicator 62 is connected with the processor 61.

It should be noted that the memory 63 in the control unit 60 mentioned above can be implemented in the form of a software functional unit and can be sold or used as an independent product, the memory 63 can be stored in a computer-readable storage medium. Based on this understanding, the technical solution of this embodiment essentially or the part that contributes to the conventional art or the part of the technical solution can be embodied in the form of a software product; and the computer software product is stored in a storage medium, including several instructions which can be used to make a computer (which may be a personal computer, an electronic device, or a network device, etc.) execute all or part of the operations of this embodiment.

This embodiment may also provide a storage medium that stores a program, and when the program is executed by the processor 61, the path planning method for a robotic mower mentioned above is implemented. The storage media includes all forms of non-volatile memory, media and memory devices, including, for example: semiconductor memory devices, such as EPROM, EEPROM, or flash memory devices; magnetic disks, such as internal hard disks or removable disks; magneto-optical disks; and CD-ROM and DVD-ROM disks.

In summary, the robotic mower and its path planning method, system and device of this embodiment can be used to plan the path for the robotic mower to leave the charger station, so that the robotic mower leaves the charger station along a different path each time, in order to avoid causing track area when the robotic mower exits the station along a fixed path which affects the growth of lawn or vegetation in the track area. The robotic mower and its path planning method, system and device of this embodiment can be used to plan the path for the robotic mower to leave the charger station, so that the robotic mower leaves the charger station along a different path each time, so that repeatedly mowing along the same path can be prevented, and the mowing efficiency and the beauty of the lawn can be improved.

### The second embodiment

In order to prevent the robotic mower from leaving the station along a fixed path, it is prone to cause tracks, and causes more mowing on the same path. This embodiment discloses another method, system and device for path planning of a robotic mower for the robotic mower to leave the charger station.

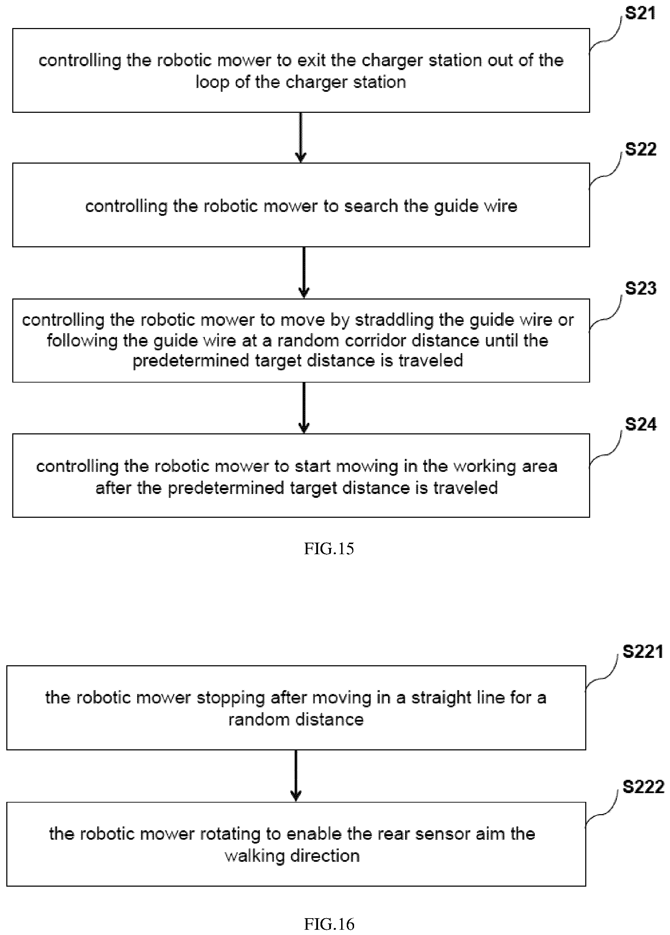

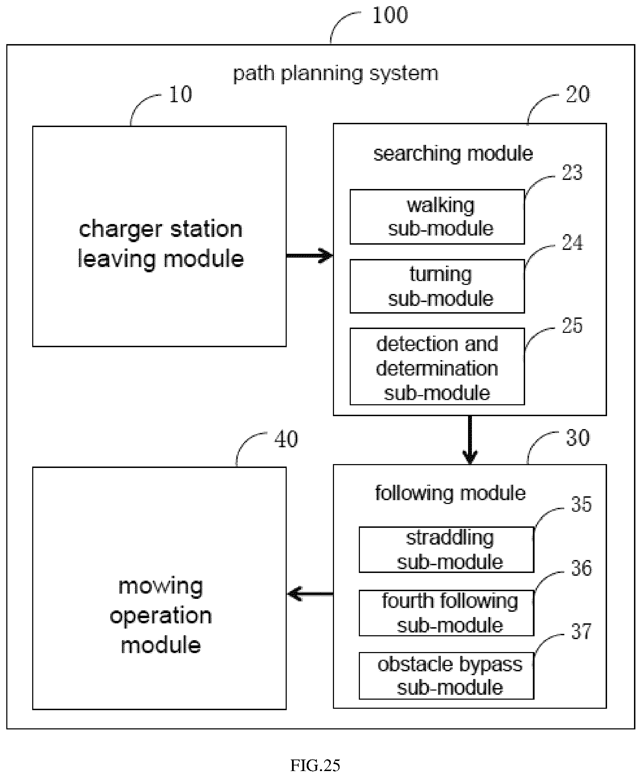

Wherein, FIG. 14 shows a schematic structural view of the path planning device of the robotic mower of this embodiment. FIG. 15 shows a schematic flow chart of the path planning method of the robotic mower of this embodiment. FIG. 25 shows a block view of the path planning system of the robotic mower of this embodiment. It should be noted that, in order to make the drawings clearer, the robotic mower and the charger station are enlarged and shown in FIG. 14 and FIG. 17 to FIG. 24. In this embodiment, the robotic mower includes a self-propelled robotic mower, which is a battery-powered electric tool that needs to be charged regularly. The robotic mower can move within the working area defined by the boundary wire when used.

Please refer to FIG. 2 and 14, similar to the first embodiment, the path planning device of the robotic mower is used for the robotic mower 1 exiting the charger station in this embodiment includes a robotic mower 1, a guide wire 7, a boundary wire 2, an obstacle detection device 50 and a charger station 3. The robotic mower 1 includes a main body, a control unit 60 arranged on the main body and at least two sensors 5. Wherein, one sensor 5 is arranged on a front part of the main body and serve as a front sensor 5a, and the other sensor is arranged on a rear part of the main body and serve as a rear sensor 5b. The sensors 5 are used to sense the guide signal of at least one of the boundary wire 2, the guide wire 7, or the loop 4 of the charger station. The control unit 60 is used for controlling the robotic mower 1 to leave the charger station 3 according to the guide signal. For detailed description of the robotic mower 1, the boundary wire 2, the obstacle detection device 50, and the charger station 3, please refer to the first embodiment, which will not be repeated here.

In this embodiment, the guide signal of the boundary wire 2, the guide wire 7 or the loop 4 of the charger station, the sensors 5, and the functioning modes of the guide signal and the sensors 5 are the same as in the first embodiment, so they will not be repeated here. The following will take the sensors 5 as magnetic induction coils and the guide signal generated by the boundary wire 2, the guide wire 7 or the loop 4 of the charger station as an alternating magnetic field as an example to illustrate the technical solution of this embodiment.

FIG. 15 shows the path planning method of the robotic mower for the robotic mower 1 leaving the charger station 3 of this embodiment, and the guide signals of the boundary wire 2 and the loop 4 of the charger station are sensed by two magnetic induction coils (respectively as a front sensor 5a and a rear sensor 5b) arranged at the front end and the rear end of the robotic mower 1 to realize that the robotic mower 1 can leave the charger station 3. Wherein, the magnetic induction coil which serves as the front sensor 5a is set on a center line of the front part of the main body, the magnetic induction coil which serves as the rear sensor 5b is set on one side of a center line of the rear part of the main body.

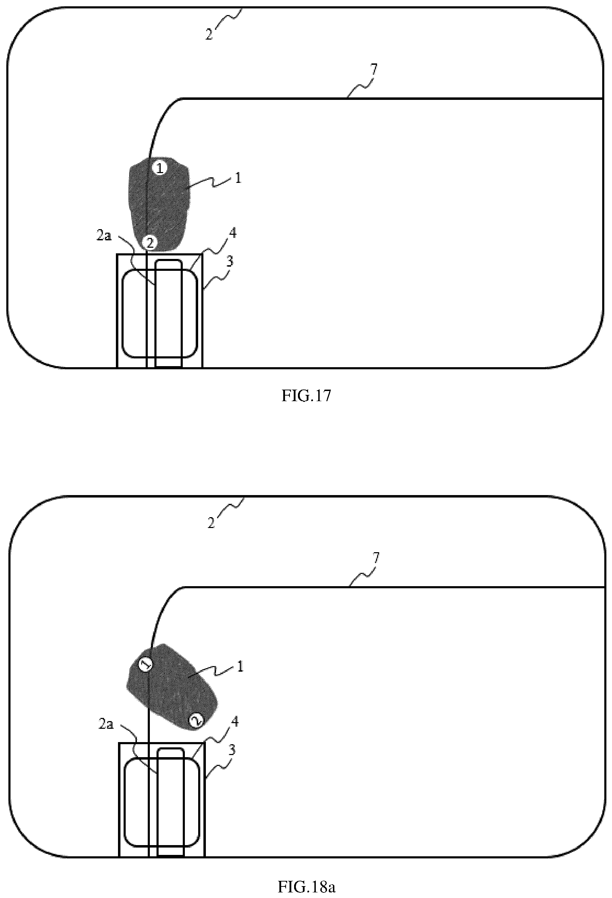

Please refer to FIG. 15, in this embodiment, the path planning method of the robotic mower includes the following steps: S21, controlling the robotic mower 1 to exit the charger station 3 out of the loop 4 of the charger station, S22, controlling the robotic mower 1 to search the guide wire 7, wherein, the guide wire 7 is pre-laid in the working area of the robotic mower, S23, controlling the robotic mower 1 to move by straddling the guide wire 7 or following the guide wire 7 at a random corridor distance, until the predetermined target distance is traveled, S24, after the predetermined target distance is traveled, controlling the robotic mower 1 to start mowing in the working area. Wherein, FIG. 17 through FIG. 23 respectively correspond to schematic views of the position and orientation of the robotic mower 1 in the working area in different steps of the path planning method of the robotic mower 1. The path planning method of the robotic mower 1 in this embodiment will be described according to FIG. 17 through FIG. 23 in follow.

Firstly, execute S21, controlling the robotic mower 1 to exit the charger station 3 according to the guide signal of the loop 4 of the charger station detected by the rear sensor 5b. After the charging is finished, the robotic mower 1 needs to exit the charger station 3 and keep a certain distance to the charger station 3. As shown in FIG. 14, after the charging is finished, the robotic mower 1 start to exit the charger station. When a polarity of the guide signal of the loop 4 of the charger station detected by the rear sensor 5b reverses (a polarity of the induction current of the rear sensor 5b reverses), it indicates the robotic mower 1 exits out of the loop 4 of the charger station.

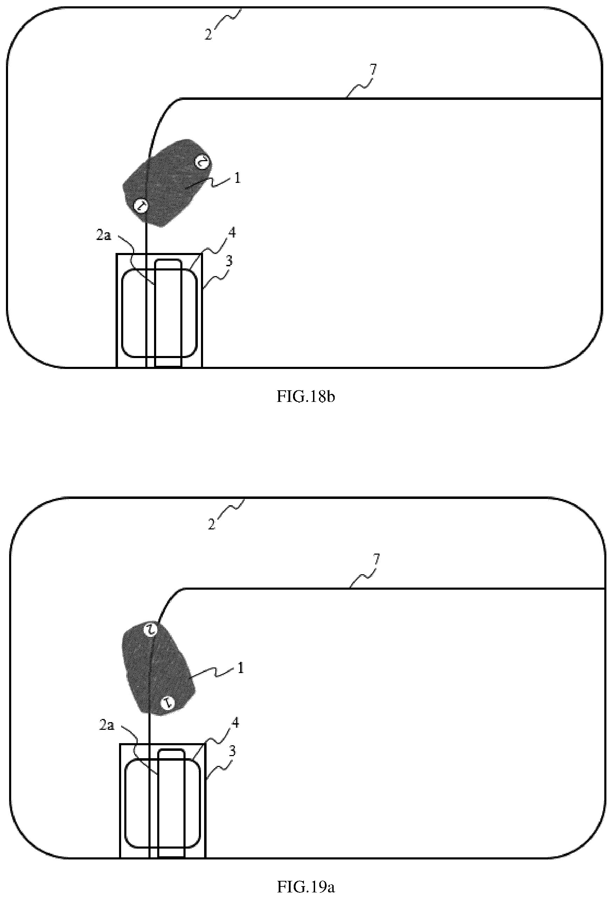

Next, execute S22, controlling the robotic mower to search the guide wire 7 according to the guide signal of the guide wire 7 detected by the rear sensor 5b. As shown in FIG. 16, S22 may further include S221 to S223. In S221, as shown in FIG. 17, the robotic mower 1 stops after moving in a straight line for a random distance, the random distance may be a random value from 10cm to 50cm, for example: 10cm, 20cm, 30cm, 40cm and 50cm, of course the distance may be selected out of the above-mentioned range according to actual requirements. In S222, as shown in FIG. 18a and FIG. 18b, the robotic mower 1 rotates to enable the rear sensor 5b aim the walking direction, so as to enable the robotic mower 1 to move in a direction away from the charger station 3, a rotation direction may be decided according to a polarity of the detected signal by the rear sensor 5b. In S223, determining whether the guidance signal of the guide wire is detected or not. The rear sensor 5b (also may use the front sensor 5a, or both) is used to detect the guide signal of the guide wire 7. If the guide signal of the guide wire 7 is not detected, the robotic mower 1 stops working, when the guide signal of the guide wire 7 is detected, the following step will be continued to execute.

Next execute S23, starting to measure a moving distance of the robotic mower 1, controlling the robotic mower to move by straddling or following the guide wire 7 according to the guide signal of the guide wire 7 detected by the front sensor 5a and the rear sensor 5b, until the predetermined target distance is traveled. S23 may further be divided into two sub-steps S231 and S232, one of the above may be selected to operate in actual operation.

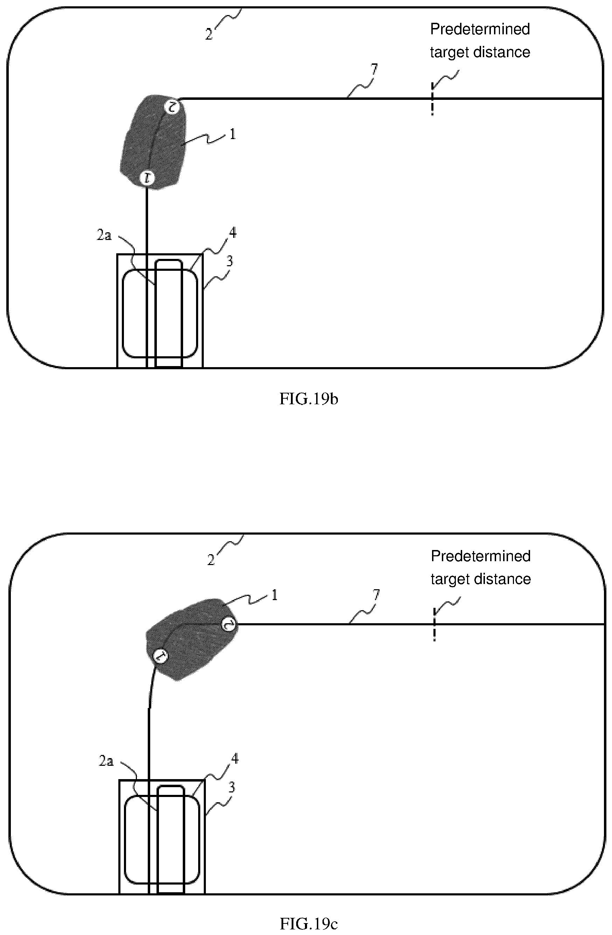

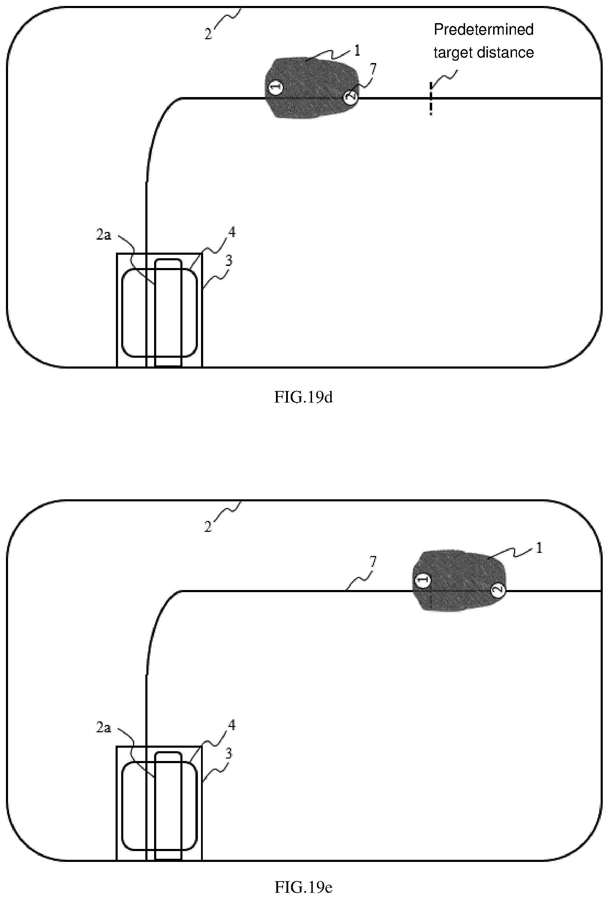

In S231, as shown in FIG. 19a to FIG. 19e, controlling the robotic mower 1 to move by straddling the guide wire 7 according to the guide signal of the guide wire 7 detected by the front sensor 5a and the rear sensor 5b, until the predetermined target distance is traveled. Firstly, as shown in FIG. 19a, controlling the robotic mower 1 to enable the guide wire 7 cross the rear sensor 5b, and then as shown in FIG. 19b through FIG. 19e, controlling the robotic mower 1 to move for the predetermined target distance by straddling the guide wire 7.

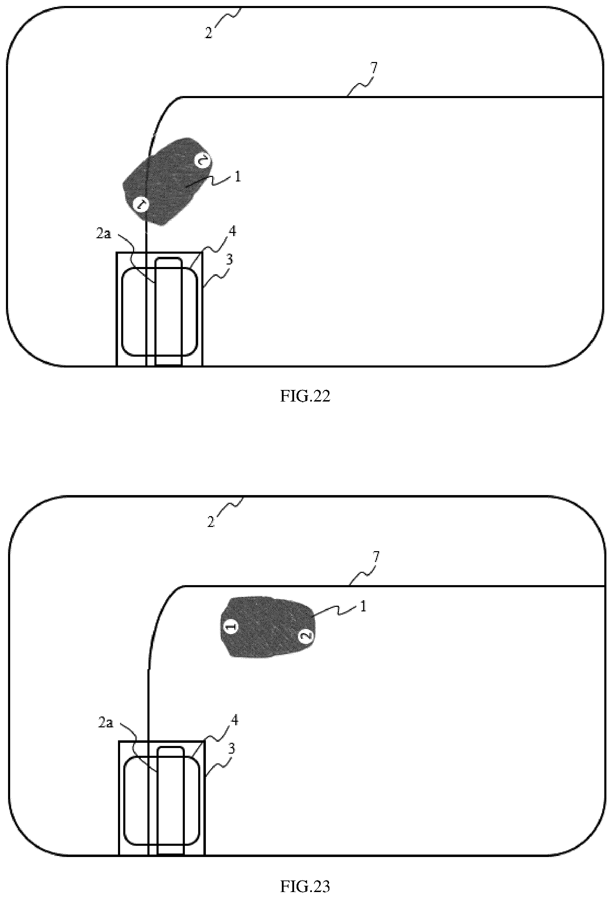

In order to avoid the tracks generated from straddling the guide wire 7 for multiple times and avoid tracks caused by repeat rolling which can affect the growth of the lawn or vegetation in the track area, in S232, as shown in FIG. 22 and 23, the robotic mower moves by following the guide wire 7 according to the guide signal of the guide wire 7 detected by the front sensor 5a and the rear sensor 5b. As shown in FIG. 22, firstly controlling the rear part of the robotic mower 1 to rotate for a random angle, the angle may be decided according to a distance between the rear sensor 5b and the guide wire 7, and then defining the distance between the rear sensor 5b and the guide wire 7 as the random corridor distance. Then, as shown in FIG. 22, the robotic mower 1 use the rear sensor 5b to collect the guide signal of the guide wire 7. Finally as shown in FIG. 23, the robotic mower 1 moves by following the guide wire 7 according to the collected guide signal amplitude of the guide wire 7.

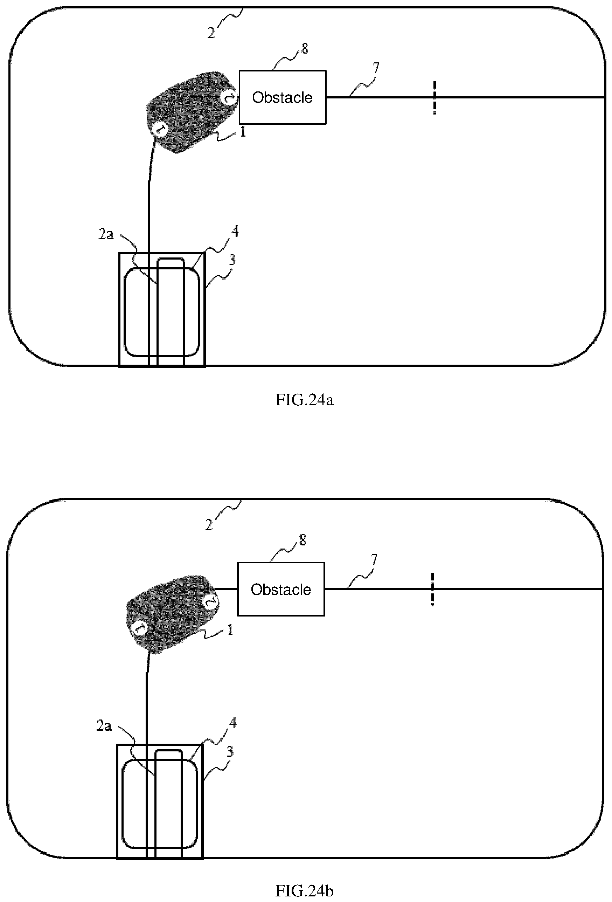

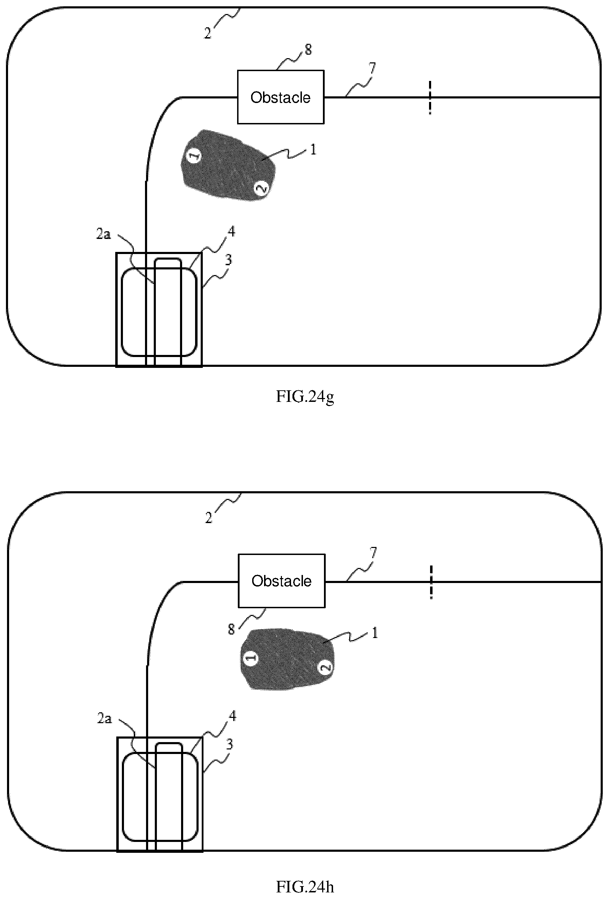

As shown in FIG. 24a through FIG. 24i, an obstacle 8 (such as tree, people, animal, etc.) might occur in a moving path straddling or following the guide wire 7 of the robotic mower 1, in order to avoid the obstacle 8 blocking the robotic mower 1 to exit the station, S23 further includes, controlling the robotic mower 1 to execute an obstacle bypass operation to bypass the obstacle 8 for at least one time when controlling the robotic mower 1 to move by straddling the guide wire 7 or following the guide wire 7 at the random corridor distance and meeting the obstacle 8. The obstacle bypass operation includes: firstly controlling the robotic mower 1 to reverse for a predetermined backwards distance when the robotic mower 1 meeting the obstacle 8 during moving, then controlling the robotic mower 1 to rotate for a predetermined angle in a direction away from the guide wire 7, finally controlling the robotic mower 1 to move in an arc to try to bypass the obstacle 8. It should be noted that when bypassing the same obstacle, the predetermined backwards distance and the predetermined angle for multiple obstacle bypass operations may be the same or different.

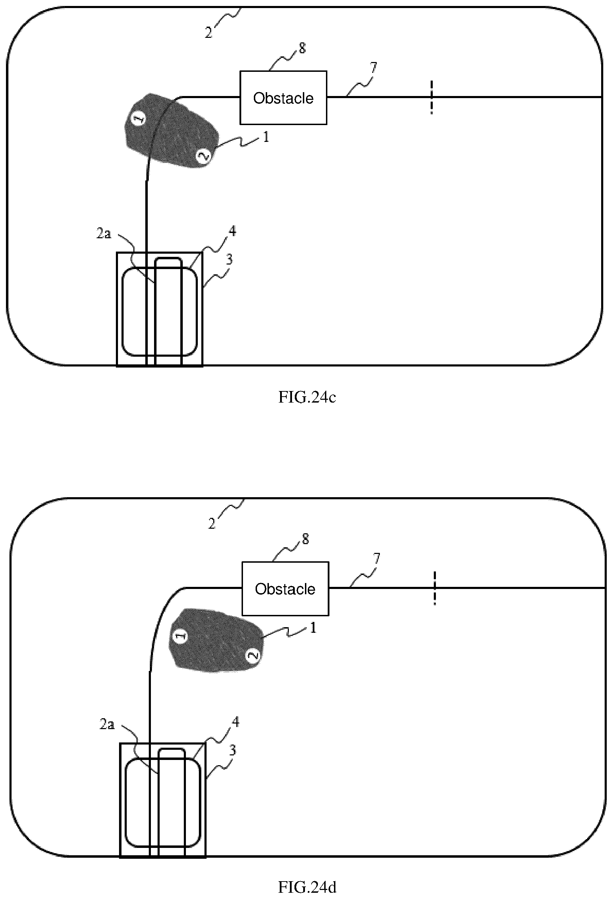

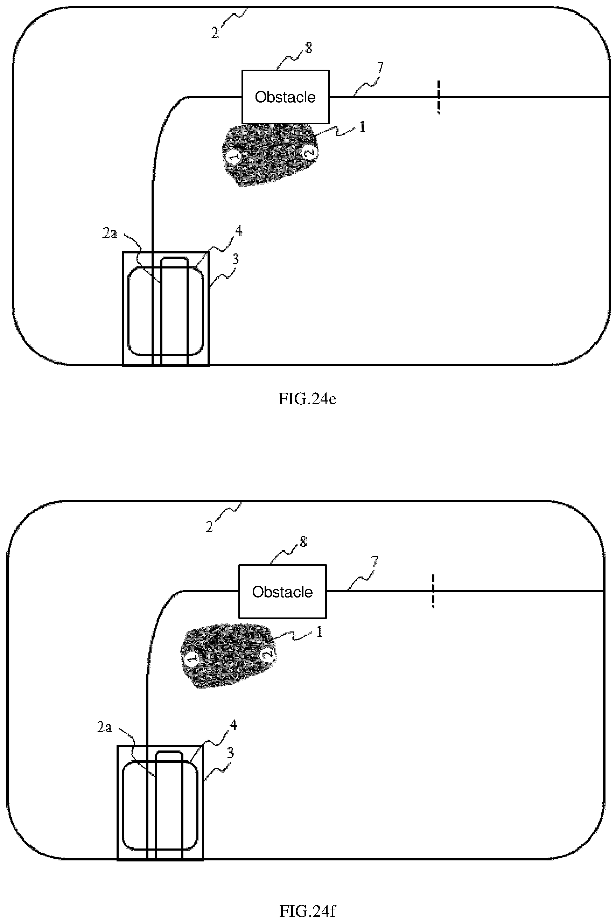

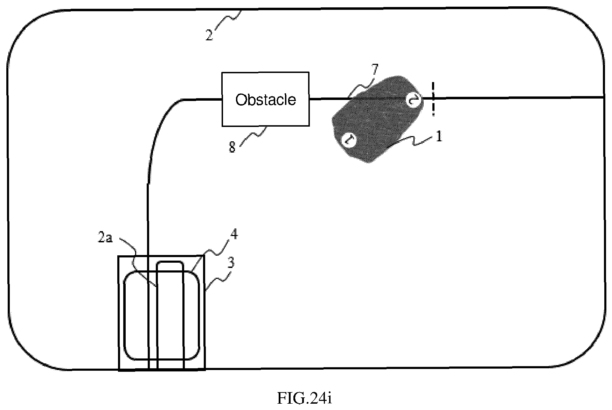

Please refer to FIG. 24a through FIG. 24i. The explanation takes a bypass of obstacle during moving by straddling the guide wire 7 as an example, the bypass of obstacle during moving by following the guide wire 7 is similar. Combined with FIG. 24a through 24i, it will be explained by taking an example that an obstacle bypass sensor 104 adopts a collision sensor, and the obstacle 8 is bypassed through two obstacle bypass operations. As shown in FIG. 24a, when the robotic mower 1 moving by straddling or following the guide wire 7 and meeting the obstacle 8, the robotic mower 1 is controlled to reverse for the predetermined backwards distance. As shown in FIG. 24b, the predetermined backwards distance needs to be adjusted according to actual requirements, as an example, the predetermined backwards distance may be from 10cm to 30cm, such as 10cm, 20cm, or 30cm. As shown in FIG. 24c, the robotic mower 1 is controlled to rotate for a predetermined angle away from the guide wire 7, the predetermined angle may be from 30° to 60°, such as 30°, 40°, 50° or 60°. As shown in FIG. 24d, the robotic mower 1 is controlled to move in an arc around the obstacle 8 to try to bypass the obstacle 8. As shown in FIG. 24e, the robotic mower 1 meets the obstacle 8 again while trying to bypass the obstacle 8. An operation of reverse-rotate-move in an arc referring to FIG. 24f to 24h is repeated. As shown in FIG. 24i, the robotic mower 1 bypasses the obstacle 8. The front sensor 5a and/or the rear sensor 5b are used to search the guidance signal amplitude of the guide wire 7 when moving by straddling or following the guide wire 7 previously. The robotic mower 1 continue to move by straddling or following the guide wire 7 according to the detected guidance signal amplitude of the guide wire 7 until the predetermined target distance is traveled.

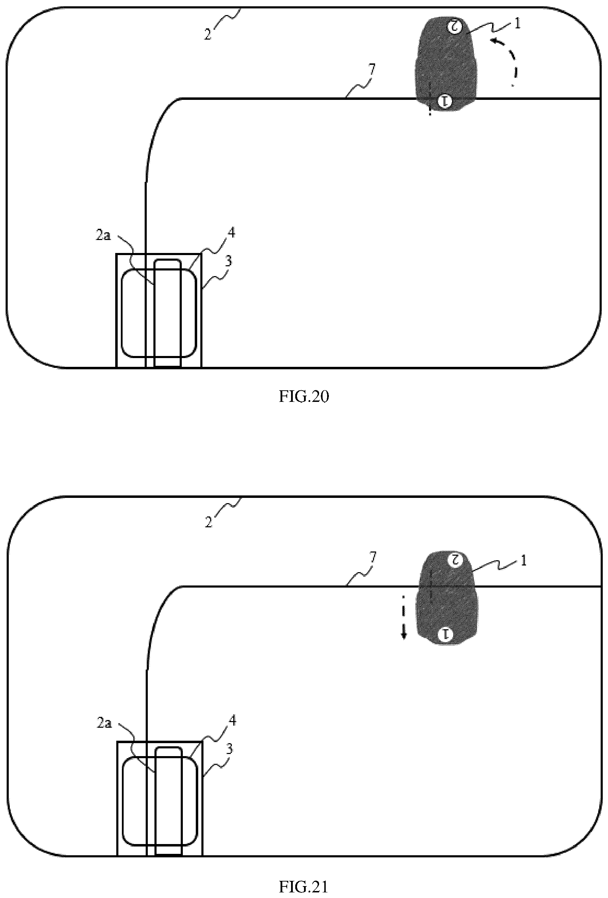

Finally, execute S24, as shown in FIG. 20 and FIG. 21, when the total moving distance of the robotic mower 1 is detected equal to the predetermined target distance, it means that the robotic mower 1 has reached the target position, then the robotic mower 1 is controlled to stop straddling or following the guide wire 7. The robotic mower 1 first rotates for 90° (of course may be any other appropriate angle) to any direction, and then starts to mow in the working area limited by the boundary wire 2. As an example, the robotic mower 1 can mow in a random manner in the working area, and when mowing randomly, the robotic mower 1 can randomly rotate 360°. When the robotic mower 1 randomly rotates a random direction to mow forward, the robotic mower 1 will move in a straight line until it reaches the boundary wire 2 (whether the robotic mower 1 crosses the boundary wire 2 can be determined by the polarity of the induced current generated by the front sensor 5a in response to the guide signal of the boundary wire 2). When reaching the boundary wire 2, the robotic mower 1 will randomly rotate an angle inward to mow.

It should be noted that the division of operations in the various methods above is just for clarity of description. When implemented, it can be combined into one operation or some operations can be split into multiple operations, provided that the same logical relationship is contained, all falling within the scope of disclosure. Adding insignificant modifications to the algorithm or process or introducing insignificant design, but not changing the core design of the algorithm and process are within the scope of protection of the disclosure.

As shown in FIG. 25, the embodiment also introduces a path planning system of a robotic mower for realizing the path planning method of the above robotic mower. The path planning system of the robotic mower includes a charger station leaving module 10, a searching module 20 (as a guide wire searching module), a following module 30 (as a straddling and following module), and a mowing operation module 40. The charger station leaving module 10 is use to control the robotic mower 1 to exit the charger station 3 until move out of the loop 4 of the charger station. The searching module 20 is used to control the robotic mower 1 to search the guide wire 7, wherein the guide wire 7 is pre-laid in the working area of the robotic mower 1. The following module 30 is used to control the robotic mower 1 to move by straddling the guide wire 7 or following the guide wire 7 at the random corridor distance, until the predetermined target distance is traveled. The mowing operation module 40 is use to control the robotic mower 1 to start mowing in the working area after the predetermined target distance is traveled.

Please refer to FIG. 25, the searching module 20 includes a walking sub-module 23, a turning sub-module 24 and a detection and determination sub-module 25. The walking sub-module 23 is used to control the robotic mower 1 continue to move for a random distance. The turning sub-module 24 is used to control the robotic mower 1 to turn in order to aim the rear sensor 5b to a walking direction. The detection and determination sub-module 25 is used to determine whether the guide signal of the guide wire 7 is detected after the rear sensor 5b aims the walking direction, when the guide signal of the guide wire 7 is detected, the robotic mower 1 is controlled to move by straddling the guide wire 7 or following the guide wire 7 at the random corridor distance, until the predetermined target distance is traveled.

Please refer to FIG. 25, the following module 30 further includes a straddling sub-module 35, a fourth following sub-module 36 and an obstacle bypass sub-module 37. The straddling sub-module 35 is used to control the robotic mower 1 to enable the guide wire 7 and the rear sensor 5b to cross, and control the robotic mower 1 to move by straddling the guide wire 7 until the predetermined target distance is traveled. The fourth following sub-module is used to control a rear part of the robotic mower 1 to rotate for a random angle, define a distance between the rear sensor 5b and the guide wire 7 as the random corridor distance, and then control the robotic mower 1 to move by following the guide wire 7 at the random corridor distance. The obstacle bypass sub-module 37 is used to control the robotic mower 1 to execute at least one obstacle bypass operation when meeting the obstacle during the moving of the robotic mower 1 by straddling the guide wire 7 or following the guide wire 7 at a random corridor distance.

It should be noted that the path planning system of the robotic mower of this embodiment is a system corresponding to the path planning method of the robotic mower mentioned above, and the functional modules or functional sub-modules in the path planning system of the robotic mower respectively corresponds to the corresponding operations in the path planning method of the robotic mower. The path planning system of the robotic mower of this embodiment can be implemented in cooperation with the path planning method of the robotic mower. The relevant technical details mentioned in the path planning method of the robotic mower of this embodiment are still valid in the path planning system of the robotic mower. In order to reduce repetition, it will not be repeated here. Correspondingly, the relevant technical details mentioned in the path planning system of the robotic mower of this embodiment can also be applied to the path planning method of the robotic mower mentioned above.

In the implementation process, each operation of the method and the modules mentioned above can be completed by an integrated logic circuit of hardware in an element of the processor 61 or instructions in the form of software.

The path planning method of the robotic mower in this embodiment can also be implemented by a control unit 60 arranged on the main body of the robotic mower 1. Please refer to FIG. 13, the control unit 60 includes a memory 63 and a processor 61 that are connected to each other. The memory 63 stores program instructions, and the program instructions are executed by the processor 61 to implement the path planning method of the robotic mower described above. It should be noted that, when it is necessary to communicate with the outside world, the control unit 60 further includes a communicator 62, and the communicator 62 is connected to the processor 61. For a detailed description of the control unit 60, please refer to the first embodiment, which will not be repeated here.

In summary, the robotic mower and its path planning method, system and device of this embodiment can be used to plan the path for the robotic mower to leave the charger station, so that the robotic mower leaves the charger station along a different path each time in order to avoid track when the robotic mower exits the station along a fixed path, which affects the growth of lawn or vegetation in the track area. The robotic mower and its path planning method, system and device of this embodiment can be used to plan the path for the robotic mower to leave the charger station, so that the robotic mower leaves the charger station along a different path each time, so that repeatedly mowing along the same path can be prevented, and the mowing efficiency and the beauty of the lawn can be improved. The robotic mower and its path planning method, system, device in this embodiment can simplify a path planning of the robotic mower leaving the charger station since the guide wire may be set as a relatively simple shape as needed. The robotic mower and its path planning method, system, device in this embodiment can automatically bypass the obstacles when straddling or following the guide wire, and return to straddle or follow the guide wire again to move until a predetermined target distance is traveled, which realizes that the robotic mower leaves the charger station.

### The third embodiment

This embodiment provides a self-propelled power device, the self-propelled power device includes a main body, driving wheels and supporting wheels arranged on the main body, a working assembly, a power supply assembly, a GPS positioning system, a detection system, a data processing system, and a control system. The working assembly is used to implement or assist in implementing the operating functions of smart work device, such as the cutting assembly of the mower, the suction and sweeping assembly of the sweeping robot, etc., which are not limited here. Hereinafter, in this embodiment, a robotic mower (also referred to as an automatic mower) is taken as an example for detailed description.

The robotic mower 1 includes a main body, a cutting assembly arranged on the main body, a power supply assembly, a GPS positioning system, a detection system, a data processing system, and a control system. The main body is provided with two driving wheels located on both sides of the main body. The driving wheels are generally located at the rear of the main body, and the two driving wheels are respectively driven by two driving motors. The front of the main body is also provided with at least one supporting wheel. The robotic mower is supported for travel by a walking assembly including the driving wheels and the supporting wheel. The supporting wheel is generally a universal wheel so that the robotic mower 1 can turn.

The cutting assembly includes a cutting motor and a cutting component driven by the cutting motor. The cutting assembly is substantially located at the center of the mower, the rotation axis of the cutting motor is substantially perpendicular to the horizontal plane, and the cutting assembly can be adjusted by the operator to adjust the height from the ground, so as to adjust cutting height. The power supply assembly includes a rechargeable battery and a charging system that supplies power to the rechargeable battery.

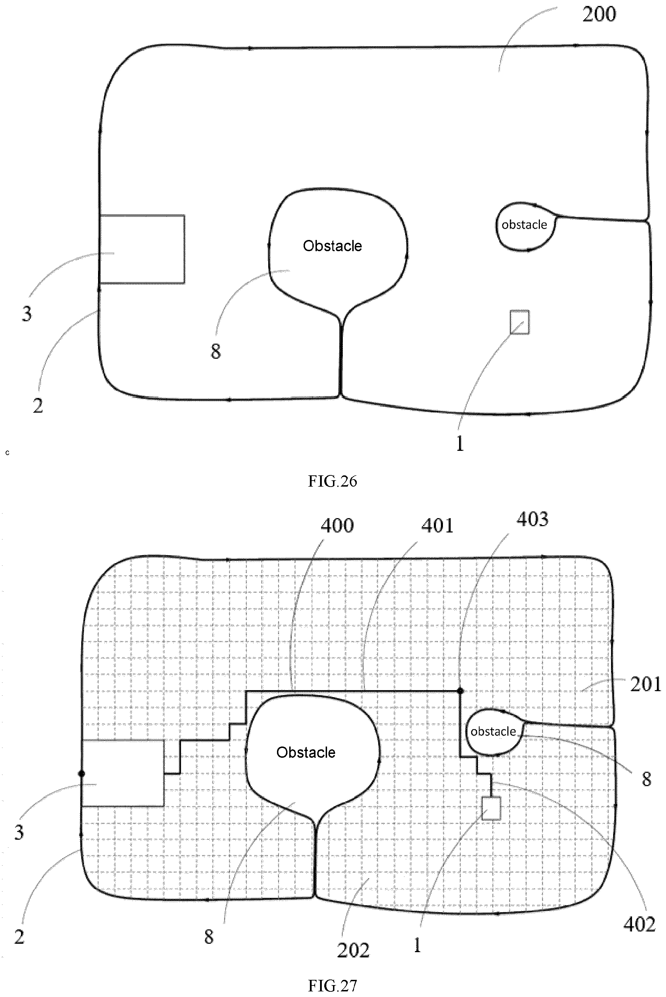

Please refer to FIG. 26, which is a schematic view of a distribution of the robotic mower 1 which needs to be returned for charging, the working area 200, and the charger station 3. The working area 200 of the robotic mower 1 is defined by the boundary wire 2 (also called the boundary signal line). The charger station 3 is located on the boundary wire 2 and is used to charge the robotic mower 1. The boundary wire 2 is drawn from the positive terminal of the charger station 3, surrounds the working area 200 and the obstacle 8, and then is connected to the negative terminal of the charger station 3. The charger station 3 includes a signal generating device for generating a pulse signal of a certain frequency which leads to the boundary wire 2.

The GPS positioning system is used to obtain the current position of the robotic mower 1. When the robotic mower 1 is located at the charger station 3 for the first time, the GPS positioning system is further used to obtain the current position of the charger station 3. The detection system is used to obtain moving path of the robotic mower 1.

Please refer to FIG. 27, which is a schematic view of a virtual working area map 301 and a return path 400 of this embodiment. The data processing system is used to obtain the virtual working area map 301 corresponding to the working area 200 and divide the virtual working area map 301 into a number of virtual grids 202 to obtain the virtual positions of the robotic mower 1 and the charger station 3 on the virtual working area map 301. In addition, the data processing system plans the X-axis direction path 401 from the position of the charger station 3 according to the virtual position, and plans the Y-axis direction path 402 from the position of the robotic mower 1. When the X-axis direction path and the Y-axis direction path intersect at the intersection 403, a return path 400 will be generated.

Please refer to FIG. 27, the X-axis direction path 401 and the Y-axis direction path 402 are planned along the virtual grid 202. Between the charger station 3 and the intersection 403, the X-axis direction path 401 extends along the X-axis direction and deviates toward one side of the Y-axis, and is step-shaped. In this embodiment, according to the positions of the obstacle 8 and the robotic mower 1, the planned path deviates to the left. In other embodiments, the difference in the position of the obstacle and the robotic mower may cause the X-axis direction path to deviate to the right or to be a straight line extending along the X-axis direction.

Similarly, the Y-axis direction path 402 extends along the Y-axis direction and deviates toward one side of the X-axis, and is step-shaped. In this embodiment, according to the position of the obstacle 8 and the robotic mower 1, the planned path deviates to the left. In other embodiments, the difference in the position of the obstacle and the robotic mower may cause the Y-axis direction path to deviate to the right or be a straight line extending along the Y-axis direction. In addition, since the X-axis direction path 401 and the Y-axis direction path 402 are planned along the virtual grid 202, therefore, when the X-axis direction path 401 and the Y-axis direction path 402 deviate to one side, they deviate by at least one grid.

The control system is used to control the movement of the robotic mower 1. The control system controls the moving direction and speed of the robotic mower 1 by controlling the rotation speeds of the two driving motors. When the rotation speeds of the driving motors are different, the robotic mower 1 can turn. When the rotation speeds of the driving motor are the same, the robotic mower 1 can move linearly. When the rotation speed of the driving motor is reversed, the robotic mower 1 can turn in situ at zero-position. After the data processing system completes the planning of the return path 400, the control system controls the robotic mower 1 to move along the Y-axis direction path 402 and the X-axis direction path 401 in sequence, and return to the charger station 3.

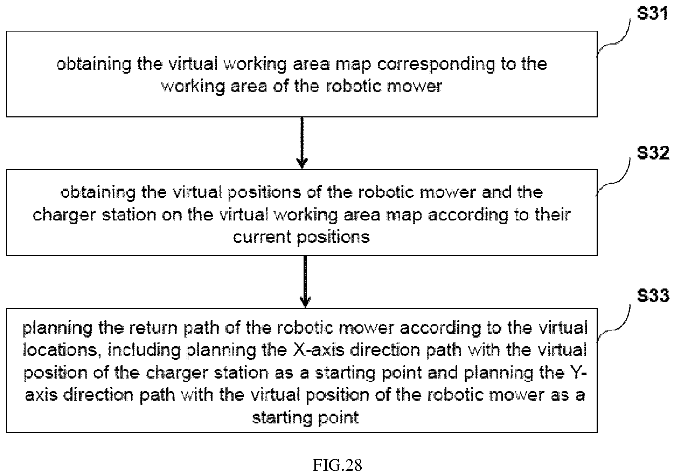

Please refer to FIG. 27 and FIG. 28. The method for planning the return path of the robotic mower 1 provided in this embodiment includes the following steps: S31, obtaining a virtual working area map 301 corresponding to the working area 200 of the robotic mower 1; S32, obtaining the virtual positions of the robotic mower 1 and the charger station 3 on the virtual working area map 301 according to current positions thereof; and S33, planning the return path 400 of the robotic mower 1 according to the virtual locations, including: planning the X-axis direction path 401 with the virtual position of the charger station 3 as a starting point and planning the Y-axis direction path 402 with the virtual position of the robotic mower 1 as a starting point. When the X-axis direction path 401 and the Y-axis direction path 402 intersect, the return path 400 is obtained.

Wherein, S31 includes: setting a boundary wire 40 on the boundary of the working area 200, the robotic mower 1 moving a circle along the boundary wire 40 and detecting the moving path to obtain the virtual working area map 301. The robotic mower 1 automatically moves one turn along the boundary wire 40 after starting and returns to the charger station 3. The detection system defines a virtual working area map 301 with the moving path in a circle of the robotic mower 1 through the data processing system.

S32 includes: defining the position of the charger station 3 as the origin of the coordinate; comparing the current position of the robotic mower 1 with the virtual working area map 301 to obtain the corresponding virtual position of the robotic mower 1 on the virtual working area map 301. When robotic mower 1 is activated in the charger station 3, the GPS positioning system locates the initial position of the robotic mower 1 in the charging state, the initial position being the current position of the charger station 3. The data processing system takes this initial position as the origin of the coordinates. When the robotic mower 1 needs to return to the charger station 3 for charging after working in the working area 200, the GPS positioning system locates the current position of the robotic mower 1 in the working area 200. The data processing system compares the current position of the robotic mower 1 with the virtual working area map 301 to obtain the virtual position of the robotic mower 1.

S33 includes: dividing the virtual working area map 301 into a number of virtual grids 202. In addition, the virtual grid 202 is only formed inside the working area surrounded by the boundary wire 40 and does not exceed the boundary wire 40. The size of the virtual grid 202 can be designed according to actual needs, and is not limited here. The X-axis direction path 401 and the Y-axis direction path 402 are planned according to the virtual positions of the charger station 3 and the robotic mower 1.

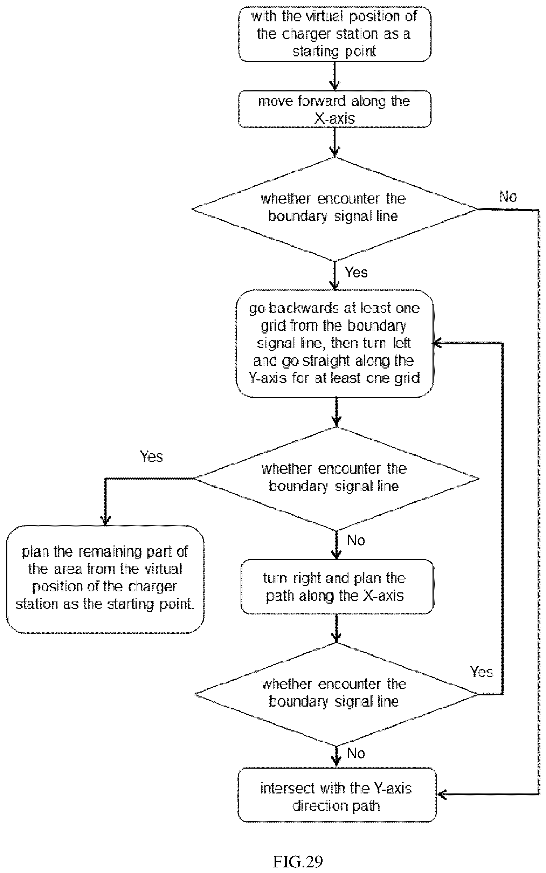

Please refer to FIG. 29, which is a partial logic schematic view of planning an X-axis direction path 401 with the virtual position of the charger station 3 as a starting point. Take the virtual position of the charger station 3 as the starting point and move forward along the X-axis. If it encounters the boundary wire 40, the X-axis direction path will go backwards at least one grid from the boundary wire 40, then turn and go straight along the Y-axis for at least one grid, then turn back to the X-axis direction and continue to plan the path in the same way, in which the turning direction is always the same until the X-axis direction path intersects the Y-axis direction path or the boundary wire 40 is encountered when moving along the Y-axis linearly.

When the boundary wire 40 is encountered along the Y-axis, the X-axis direction path is re-planned from the virtual position of the charger station 3, specifically: When encountering the boundary wire 40 along the X-axis direction, the X-axis direction path will go backwards at least one grid from the boundary wire 40, and then goes straight for at least one grid in the direction opposite to the previous turning direction, which means that it turns right and go straight for at least one grid, and then turns back to the X-axis direction and continue to plan the path in the same way. The turning direction is always the same until the X-axis direction path and the Y-axis direction path intersect.

Please refer to FIG. 27. When planning the X-axis direction path 401, the virtual working area map 301 is divided into upper and lower areas along the X-axis direction based on the charger station 3. In this embodiment, the upper area can be planned first, which means that the X-axis direction path 401 is obtained. It is also possible to plan the lower area first. Due to the blockage of the boundary wire 40, a path that intersects the Y-axis direction path cannot be obtained in this area, and the remaining part of the area, namely the upper area, needs to be planned from the virtual position of the charger station 3 as the starting point. At last, an X-axis direction path 401 is formed in the upper area.

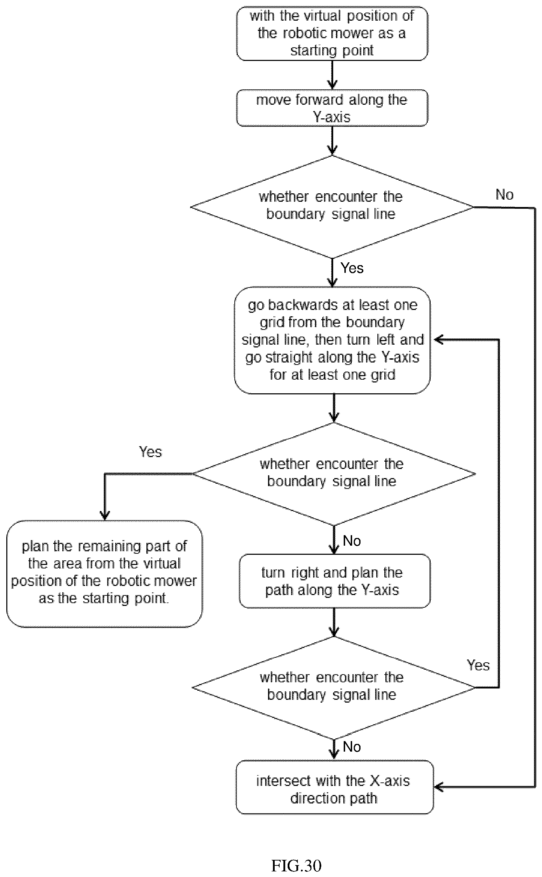

Please refer to FIG. 30, which is a partial schematic logic view of planning the Y-axis direction path with the virtual position of the robotic mower 1 as a starting point. The Y-axis direction path planning method is substantially similar to the X-axis direction path planning method, specifically: setting the virtual position of the robotic mower 1 as the starting point and moving forward along the Y-axis direction. If the Y-axis direction path encounters the boundary wire 40, the Y-axis direction path will go backwards at least one grid from the boundary wire 40, and then it will turn and go straight along the X-axis for at least one grid. And then it will turn back to the Y-axis direction and continue to plan the path in the same way, the turning direction is always the same, in this embodiment, the turning direction is turning left until the Y-axis direction path 402 and the X-axis direction path 401 intersect or until the boundary wire 40 is encountered when going straight along the X-axis.

When the boundary wire 40 is encountered along the X-axis, the Y-axis direction path 402 is re-planned from the virtual position of the robotic mower 1, specifically as follows: when encountering the boundary wire 40 along the Y-axis direction, the Y-axis direction path goes backwards at least one grid from the boundary wire 40, and then goes straight for at least one grid in the direction opposite to the previous turning direction, which means that it turns right and goes straight for at least one grid, and then turns back to the Y-axis direction and continue to plan the path in the same way. The turning direction is always the same until the Y-axis direction path 402 and the X-axis direction path 401 intersect.

Please refer to FIG. 27 together. When planning the Y-axis direction path 402, the virtual working area map 301 is divided into left and right areas along the Y-axis direction by taking the robotic mower 1 as a reference. In this embodiment, by choosing to plan the left area first, the Y-axis direction path 402 can be directly obtained. If the right area is chosen to plan first, the Y-axis path cannot be obtained in this area due to the blockage of the boundary wire 40; therefore, the remaining area, i.e. the left area, needs to be planned with the virtual position of the robotic mower 1 as the starting point; finally, a Y-axis direction path 402 is formed in the left area.

The X-axis direction path 401 and the Y-axis direction path 402 intersect and obtain an intersection 403. In this way, a complete return path 400 from the robotic mower to the charger station 3 is obtained. In some embodiments, a number of return paths 400 are planned and the shortest return path among them is selected. The control system controls the robotic mower 1 to move along the Y-axis direction path 402 and the X-axis direction path 401 in sequence, and return to the charger station 3. It should be noted that when charging is required, a return path that is different from the return path performed last time will be planned. Such a setting can avoid repeated rolling of the lawn and reduce the damage to the lawn.

In summary, the robotic mower of this embodiment forms the working area into a corresponding virtual working area map, and the X-axis direction path and the Y-axis direction path are planned on the virtual working area map. With this setting, the return path has been planned during recharging to effectively avoid obstacles in the working area. The robotic mower does not need to be adjusted for multiple times to avoid obstacles and prevent the robotic mower from being exhausted before returning to the charger station. In addition, the virtual work area map is divided into several equal virtual grids, and a shorter return path can be selected according to the distribution of the virtual grids, so that the path of the robotic mower back to the charger station is shorter, which reduces the amount of recharging that needs to be reserved, saves recharging time, and increases the working time of the robotic mower. Correspondingly, reducing the number of charging can effectively increase the service life of the battery cell. Furthermore, the robotic mower forms a virtual grid, and there is no need to actually arrange guide wires in the working area, which not only reduces the manufacturing cost of the product, but also simplifies the operations and improves the user experience. The return path planned each time in this embodiment is different from the one executed last time, so it is possible to avoid repeated rolling of the lawn and reduce the damage to the lawn.

.

## Claims

1. A path planning method of a robotic mower (1) exiting a charger station (3), wherein the robotic mower (1) comprises a main body, a control unit (60) arranged on the main body and a front sensor (5a) arranged at a front end of the main body and a rear sensor (5b) arranged at the rear end of the main body, wherein the front sensor (5a) and the rear sensor (5b) are configured to sense guide signals from a boundary wire (2) and a loop (4) in the charger station (3), wherein the loop (4) facilitates the robotic mower (1) to identify and locate a position of the charger station (3) the method comprising:
controlling, by means of the control unit (60), the robotic mower (1) to exit the charger station (3);
detecting, with the rear sensor (5b), that a polarity of the guide signal of the loop (4) of the charger station (3) has reversed, and in response thereto
controlling, by means of the control unit (60), the robotic mower (1) to continue to move for a random distance;
searching for guide signals of the boundary wire (2), including rotating the robotic mower (1) such that the rear sensor (5b) aims at a walking direction; and wherein the boundary wire (2) is laid in advance at an edge of a working area of the robotic mower,
following the boundary wire (2) at a random corridor distance, i.e. the distance between rear sensor (5b) and the boundary wire (2) until a predetermined target distance is traveled, **characterized in that** the searching for guide signals of the boundary wire (2) includes:
setting a target signal amplitude to search the boundary wire (2), the target signal amplitude corresponding to a guide signal amplitude detected by a rear sensor (5b) when the rear sensor (5b) is in a first predetermined distance from the boundary wire (2), wherein the rear sensor (5b) is arranged on a rear part of a main body of the robotic mower (1); and
seeking the target signal amplitude;
following the boundary wire until the predetermined target distance is traveled including:
when the target signal amplitude is detected, following the boundary wire in a second predetermined distance until the predetermined target distance is traveled.

2. The path planning method of the robotic mower according to claim 1, further including, mowing in the working area after the predetermined target distance is traveled.

3. A path planning system of a robotic mower (1) exiting a charger station (3), comprising:
a charger station leaving module (10), configured to control the robotic mower (1) to exit the charger station (3) and continue to move for a random distance until the robotic mower (1) is outside a loop (4) of the charger station (3), wherein the loop (4) is configured to facilitate the robotic mower (1) to identify and locate a position of the charger station (3),
a rear sensor (5b) configured to detect that a polarity of a guide signal of the loop (4) of the charger station (3) has reversed when the robotic mower (1) is outside the loop (4) of the charger station (3) and in response thereto continues to move for the random distance, **characterized in that**
the charger station (3) is further configured to set a target signal amplitude for searching a boundary wire (2), the boundary wire is pre-laid on an edge of the working area of the robotic mower (1), when a distance of the rear sensor (5b) to the boundary wire (2) corresponding to the target signal amplitude is a first predetermined distance, wherein the rear sensor (5b) further is configured to detect an amplitude of the guide signal of the boundary wire (2),
a searching module (20), configured to control the robotic mower (1) to search the target signal amplitude, i.e. to search theboundary wire (2), including to rotate the robotic mower (1) such that the rear sensor (5b) is aimed at a walking direction;, and
a following module (30), configured to control the robotic mower (1) to move by following the boundary wire (2) at a second predetermined distance until the predetermined target distance is traveled, when the target signal amplitude is found.

4. A robotic mower (1), comprising:
a main body;
at least a front sensor (5a) set on a front part of the main body;
at least a rear sensor (5b) set on a rear part of the main body;
a control unit (60) arranged on the main body, the control unit (60) comprising a processor (61) and a memory (63) coupled to each other, the memory (63) storing program instructions, when the program instructions stored in the memory (63) are executed by the processor (61), **characterized in that** the control unit (60) is configured to perform the method according to any one of claims 1 to 2.

5. The robotic mower (1) according to claim 4, wherein the front sensor (5a) is arranged on a center line of the front part of the main body, the rear sensor (5b) is arranged on a side of a center line of the rear part of the main body.

6. A memory media, comprising program instructions, which when executed by a processor (61) in a control unit (60) of a robotic mower (1) performs the path planning method according to any one of claims 1 to 2.

## Patentansprüche

1. Wegplanungsverfahren für einen Robotermäher (1), der eine Ladestation (3) verlässt, wobei der Robotermäher (1) einen Hauptkörper, eine Steuereinheit (60), die auf dem Hauptkörper angeordnet ist, und einen vorderen Sensor (5a), der an einem vorderen Ende des Hauptkörpers angeordnet ist, und einen hinteren Sensor (5b), der am hinteren Ende des Hauptkörpers angeordnet ist, umfasst, wobei der vordere Sensor (5a) und der hintere Sensor (5b) ausgebildet sind, Führungssignale von einem Begrenzungskabel (2) und einer Schleife (4) in der Ladestation (3) zu erfassen, wobei die Schleife (4) es dem Robotermäher (1) erleichtert, eine Position der Ladestation (3) zu identifizieren und zu lokalisieren, wobei das Verfahren umfasst:
Steuern, durch Mittel der Steuereinheit (60), des Robotermähers (1) zum Verlassen der Ladestation (3);
Erkennen, mit dem hinteren Sensor (5b), dass eine Polarität des Führungssignals der Schleife (4) der Ladestation (3) umgekehrt wurde, und als Reaktion darauf
Steuern, durch Mittel der Steuereinheit (60), des Robotermähers (1), sich über eine zufällige Entfernung weiterzubewegen;
Suchen von Führungssignalen des Begrenzungskabels (2), einschließlich des Drehens des Robotermähers (1) derart, dass der hintere Sensor (5b) in eine Gehrichtung zeigt; und wobei das Begrenzungskabel (2) im Voraus an einem Rand des Arbeitsbereichs des Robotermähers verlegt wird,
Folgen des Begrenzungskabels (2) in einer zufälligen Korridorentfernung, d. h. der Entfernung zwischen dem hinteren Sensor (5b) und dem Begrenzungskabel (2), bis eine vorbestimmte Zielstrecke zurückgelegt ist, **dadurch gekennzeichnet, dass** das Suchen nach Führungssignalen des Begrenzungskabels (2) Folgendes einschließt:
Einstellen einer Zielsignalamplitude zum Suchen des Begrenzungskabels (2), wobei die Zielsignalamplitude einer Führungssignalamplitude entspricht, die von einem hinteren Sensor (5b) erkannt wird, wenn der hintere Sensor (5b) in einer ersten vorbestimmten Entfernung vom Begrenzungskabel (2) ist, wobei der hintere Sensor (5b) auf einem hinteren Teil eines Hauptkörpers des Robotermähers (1) angeordnet ist; und
Anstreben der Zielsignalamplitude;
das Folgen des Begrenzungskabels, bis die vorbestimmte Zielentfernung zurückgelegt ist, Folgendes einschließt:
wenn die Zielsignalamplitude erkannt wird, Folgen des Begrenzungskabels in einer zweiten vorbestimmten Entfernung, bis die vorbestimmte Zielentfernung zurückgelegt ist.

2. Wegplanungsverfahren für den Robotermäher nach Anspruch 1, das weiter einschließt, im Arbeitsbereich zu mähen, nachdem die vorbestimmte Zielentfernung zurückgelegt wurde.

3. Wegplanungssystem für einen Robotermäher (1), der eine Ladestation (3) verlässt, umfassend:
ein Modul zum Verlassen der Ladestation (10), das ausgebildet ist, den Robotermäher (1) zu steuern, die Ladestation (3) zu verlassen und sich über eine zufällige Entfernung weiterzubewegen, bis der Robotermäher (1) sich außerhalb einer Schleife (4) der Ladestation (3) befindet, wobei die Schleife (4) ausgebildet ist, es dem Robotermäher (1) zu erleichtern, eine Position der Ladestation (3) zu identifizieren und zu lokalisieren,
einen hinteren Sensor (5b), der ausgebildet ist, zu erkennen, dass eine Polarität eines Führungssignals der Schleife (4) der Ladestation (3) umgekehrt wurde, wenn der Robotermäher (1) sich außerhalb der Schleife (4) der Ladestation (3) befindet und als Reaktion darauf sich über die zufällige Entfernung weiterbewegt, **dadurch gekennzeichnet, dass**
die Ladestation (3) weiter ausgebildet ist, eine Zielsignalamplitude zum Suchen eines Begrenzungskabels (2) einzustellen, wobei das Begrenzungskabel vorab an einem Rand des Arbeitsbereichs des Robotermähers (1) verlegt wird, wenn eine Entfernung des hinteren Sensors (5b) zum Begrenzungskabel (2), die der Zielsignalamplitude entspricht, eine erste vorbestimmte Entfernung ist, wobei der hintere Sensor (5b) weiter ausgebildet ist, eine Amplitude des Führungssignals des Begrenzungskabels (2) zu erkennen,
ein Suchmodul (20), das ausgebildet ist, den Robotermäher (1) zu steuern, die Zielsignalamplitude zu suchen, d. h. das Begrenzungskabel (2) zu suchen, einschließlich des Robotermähers (1) derart zu drehen, dass der hintere Sensor (5b) in eine Gehrichtung zeigt;, und
ein Folgemodul (30), das ausgebildet ist, den Robotermäher (1) zu steuern, sich zu bewegen, indem es dem Begrenzungskabel (2) in einer zweiten vorbestimmten Entfernung folgt, bis die vorbestimmte Zielentfernung zurückgelegt ist, wenn die Zielsignalamplitude gefunden wird.

4. Robotermäher (1), umfassend:
einen Hauptkörper,
mindestens einen vorderen Sensor (5a), der an einem vorderen Teil des Hauptkörpers angebracht ist;
mindestens einen hinteren Sensor (5b), der an einem hinteren Teil des Hauptkörpers angebracht ist;
eine Steuereinheit (60), die auf dem Hauptkörper angeordnet ist, wobei die Steuereinheit (60) einen Prozessor (61) und einen Speicher (63), die miteinander gekoppelt sind, umfasst, wobei der Speicher (63) Programmanweisungen speichert, wenn die im Speicher (63) gespeicherten Programmanweisungen von dem Prozessor (61) ausgeführt werden, **dadurch gekennzeichnet, dass** die Steuereinheit (60) ausgebildet ist, das Verfahren nach einem der Ansprüche 1 bis 2 durchzuführen.

5. Robotermäher (1) nach Anspruch 4, wobei der vordere Sensor (5a) auf einer Mittellinie des vorderen Teils des Hauptkörpers angeordnet ist, der hintere Sensor (5b) an einer Seite einer Mittellinie des hinteren Teils des Hauptkörpers angeordnet ist.

6. Speichermedium, umfassend Programmanweisungen, die, wenn sie von einem Prozessor (61) in einer Steuereinheit (60) eines Robotermähers (1) ausgeführt werden, das Wegplanungsverfahren nach einem der Ansprüche 1 bis 2 durchführen.

## Revendications

1. Procédé de planification de trajectoire d'une tondeuse robotisée (1) sortant d'une station de charge (3), dans lequel la tondeuse robotisée (1) comprend un corps principal, une unité de commande (60) agencée sur le corps principal, un capteur avant (5a) agencé à l'extrémité avant du corps principal et un capteur arrière (5b) agencé à l'extrémité arrière du corps principal, dans lequel le capteur avant (5a) et le capteur arrière (5b) sont configurés de manière à détecter des signaux de guidage provenant d'un fil de délimitation (2) et d'une boucle (4) dans la station de charge (3), dans laquelle la boucle (4) facilite l'identification et la localisation, par la tondeuse robotisée (1), d'une position de la station de charge (3), le procédé comprenant :
le fait, au moyen de l'unité de commande (60), de commander la tondeuse robotisée (1) de manière qu'elle quitte la station de charge (3) ;
le fait, au moyen du capteur arrière (5b), de détecter que la polarité du signal de guidage de la boucle (4) de la station de charge (3) s'est inversée, et en réponse à cela,
le fait, au moyen de l'unité de commande (60), de commander la tondeuse robotisée (1) de manière qu'elle continue à se déplacer sur une distance aléatoire ;
le fait de rechercher des signaux de guidage du fil de délimitation (2), incluant la rotation de la tondeuse robotisée (1) de telle sorte que le capteur arrière (5b) soit orienté dans une direction de déplacement ; et dans lequel le fil de délimitation (2) est posé à l'avance au bord d'une zone de travail de la tondeuse robotisée,
le fait de suivre le fil de délimitation (2) à une distance de couloir aléatoire, c.-à-d. la distance entre le capteur arrière (5b) et le fil de délimitation (2) jusqu'à ce qu'une distance cible prédéterminée soit parcourue, **caractérisé en ce que** la recherche de signaux de guidage du fil de délimitation (2) inclut :
le fait de définir une amplitude de signal cible pour rechercher le fil de délimitation (2), l'amplitude de signal cible correspondant à une amplitude de signal de guidage détectée par un capteur arrière (5b) lorsque le capteur arrière (5b) est à une première distance prédéterminée du fil de délimitation (2), le capteur arrière (5b) étant agencé sur une partie arrière d'un corps principal de la tondeuse robotisée (1) ; et
le fait de rechercher l'amplitude de signal cible ;
le fait de suivre le fil de délimitation jusqu'à ce que la distance cible prédéterminée soit parcourue, ce qui inclut : lorsque l'amplitude de signal cible est détectée, le fait de suivre le fil de délimitation à une deuxième distance prédéterminée jusqu'à ce que la distance cible prédéterminée soit parcourue.

2. Procédé de planification de trajectoire de la tondeuse robotisée selon la revendication 1, incluant en outre le fait de tondre dans la zone de travail une fois que la distance cible prédéterminée a été parcourue.

3. Système de planification de trajectoire d'une tondeuse robotisée (1) sortant d'une station de charge (3), comprenant :
un module (10) de sortie de station de charge, configuré de manière à commander la tondeuse robotisée (1) de telle sorte qu'elle quitte la station de charge (3) et qu'elle continue à se déplacer sur une distance aléatoire jusqu'à ce que la tondeuse robotisée (1) soit à l'extérieur d'une boucle (4) de la station de charge (3), dans lequel la boucle (4) est configurée de manière à faciliter l'identification et la localisation, par la tondeuse robotisée (1), d'une position de la station de charge (3),
un capteur arrière (5b) configuré de manière à détecter que la polarité d'un signal de guidage de la boucle (4) de la station de charge (3) s'est inversée lorsque la tondeuse robotisée (1) est à l'extérieur de la boucle (4) de la station de charge (3) et, en réponse à cela, qu'elle continue à se déplacer sur la distance aléatoire, **caractérisé en ce que**
la station de charge (3) est en outre configurée de manière à définir une amplitude de signal cible pour la recherche d'un fil de délimitation (2), le fil de délimitation étant préalablement posé sur un bord de la zone de travail de la tondeuse robotisée (1), lorsque la distance entre le capteur arrière (5b) et le fil de délimitation (2) correspondant à l'amplitude de signal cible est une première distance prédéterminée, le capteur arrière (5b) étant en outre configuré de manière à détecter une amplitude du signal de guidage du fil de délimitation (2),
un module de recherche (20), configuré de manière à commander la tondeuse robotisée (1) afin de rechercher l'amplitude de signal cible, c'est-à-dire de rechercher le fil de délimitation (2), incluant de faire pivoter la tondeuse robotisée (1) de telle sorte que le capteur arrière (5b) soit orienté dans une direction de déplacement ; et
un module de suivi (30), configuré de manière à commander la tondeuse robotisée (1) afin qu'elle se déplace en suivant le fil de délimitation (2) à une deuxième distance prédéterminée jusqu'à ce que la distance cible prédéterminée soit parcourue, lorsque l'amplitude du signal cible est trouvée.

4. Tondeuse robotisée (1), comprenant :
un corps principal ;
au moins un capteur avant (5a) placé sur une partie avant du corps principal ;
au moins un capteur arrière (5b) placé sur une partie arrière du corps principal ;
une unité de commande (60) agencée sur le corps principal, l'unité de commande (60) comprenant un processeur (61) et une mémoire (63) reliés l'un à l'autre, la mémoire (63) stockant des instructions de programme, lorsque les instructions de programme stockées dans la mémoire (63) sont exécutées par le processeur (61), **caractérisée en ce que** l'unité de commande (60) est configurée de manière à mettre en œuvre le procédé selon l'une quelconque des revendications 1 à 2.

5. Tondeuse robotisée (1) selon la revendication 4, dans laquelle le capteur avant (5a) est agencé sur une ligne centrale de la partie avant du corps principal, le capteur arrière (5b) est agencé sur un côté d'une ligne centrale de la partie arrière du corps principal.

6. Support de mémoire, comprenant des instructions de programme qui, lorsqu'elles sont exécutées par un processeur (61) dans une unité de commande (60) d'une tondeuse robotisée (1), mettent en œuvre le procédé de planification de trajectoire selon l'une quelconque des revendications 1 à 2.
